# EUROPEAN PATENT APPLICATION

(11) **EP 4 686 248 A1**
(43) Date of publication of application: **28.01.2026**
(21) Application number: 24784047.3
(22) Date of filing: 15.03.2024
(51) Int. Cl.: H04W 24/00

(54) **CHANNEL QUALITY MEASUREMENT METHOD AND APPARATUS**

(30) Priority: 06.04.2023 CN 202310412415
(71) Applicant: Huawei Technologies Co., Ltd., Shenzhen, Guangdong 518129 (CN)
(72) Inventor: JIAO, Minghan, Shenzhen, Guangdong 518129 (CN); XUAN, Yidi, Shenzhen, Guangdong 518129 (CN); LI, Ruijie, Shenzhen, Guangdong 518129 (CN); GUAN, Lei, Shenzhen, Guangdong 518129 (CN)
(74) Representative: Gill Jennings & Every LLP
(86) International application number: PCT/CN2024/081993
(87) International publication number: WO 2024/207962

(57) **Abstract**

A channel quality measurement method and an apparatus are applied to the field of wireless communication technologies. The method includes: A terminal device receives first indication information sent by a network device, where the first indication information indicates that a first channel is not transmitted in a first cell in a first time period of a first cycle and indicates that the first channel is transmitted in the first cell in a second time period of the first cycle. The terminal device determines a reporting periodicity and/or an evaluation periodicity of channel quality measurement based on the first cycle, and determines a measurement result of the channel quality measurement based on N reference signals. The channel quality measurement is RLM measurement, BFD measurement, or BFR measurement. The method is used to implement channel quality measurement in a scenario in which cell active/inactive time is configured.

## Description

### CROSS-REFERENCE TO RELATED APPLICATIONS

This application claims priority to Chinese Patent Application No. 202310412415.9, filed with the China National Intellectual Property Administration on April 6, 2023 and entitled "CHANNEL QUALITY MEASUREMENT METHOD AND APPARATUS", which is incorporated herein by reference in its entirety.

### TECHNICAL FIELD

Embodiments of this application relate to the wireless communication field, and in particular, to a channel quality measurement method and an apparatus.

### BACKGROUND

With continuous evolution of cellular communication technologies, a network transmission bandwidth continuously increases, and an increase of a peak to average power ratio (peak to average power ratio, PAPR) gradually reduces efficiency of a power amplifier (power amplifier, PA), resulting in an increase of transmit power consumption of a network device (for example, a base station). A rapid increase of transmission channels leads to an increase of static power consumption of a system.

To reduce system power consumption, configuring an energy-saving mode of the network device is a current research focus. How the network device performs channel quality measurement in the energy-saving mode also becomes a technical problem that needs to be resolved.

### SUMMARY

Embodiments of this application provide a channel quality measurement method and an apparatus, to implement channel quality measurement in a scenario in which a cell activity/inactivity time is configured.

According to a first aspect, a channel quality measurement method is provided, applied to a terminal device. The method includes: The terminal device receives first indication information sent by a network device, where the first indication information indicates that a first channel is not transmitted in a first cell in a first time period of a first cycle and indicates that the first channel is transmitted in the first cell in a second time period of the first cycle; and determines a reporting periodicity and/or an evaluation periodicity of channel quality measurement based on the first cycle, where the channel quality measurement is radio link monitoring (radio link monitoring, RLM) measurement, beam failure detection (beam failure detection, BFD) measurement, or beam failure recovery (beam failure recovery, BFR) measurement; and determines a measurement result of the channel quality measurement based on N reference signals, where N is a positive integer.

Optionally, the first indication information indicates a cell discontinuous transmission/discontinuous reception (cell DTX/DRX) configuration.

For example, the first indication information indicates the cell DTX/DRX configuration. When a network side independently configures the cell DTX/DRX for the first cell, a channel quality measurement procedure of the terminal device is affected. For example, when the network device configures cell DTX/DRX for a PCell of the terminal device, and the cell is in inactive time in a cell DTX/DRX cycle, the network device does not send an SSB and/or a periodic CSI-RS. In the foregoing implementation of this application, for this case, a method for determining the reporting periodicity and the evaluation periodicity of channel quality measurement is provided, so that the terminal device can measure channel quality by measuring a reference signal in the time period.

In a possible implementation, the channel quality measurement is the RLM measurement. The first cycle is less than or equal to a first threshold, a reporting periodicity of the RLM measurement is max(K⁽¹⁾_{RLM_report}×first reference signal periodicity, K⁽²⁾_{RLM_report}×first cycle, first duration), and the first reference signal periodicity is a periodicity of one of the N reference signals; or the first cycle is greater than the first threshold, and the reporting periodicity of the RLM measurement is K⁽³⁾_{RLM_report}×first cycle, where K⁽¹⁾_{RLM_report}, K⁽²⁾_{RLM_report}, and K⁽³⁾_{RLM_report} are all coefficients with positive values, and max(parameter 1, parameter 2, ..., parameter n) represents a maximum value in the parameter 1, the parameter 2, ..., and the parameter n, where n is a positive integer. Optionally, the first cell is a primary cell; or the first cell is a primary secondary cell, and the first cell is in an activated state. This implementation provides a method for determining the reporting periodicity for the RLM measurement.

In a possible implementation, the channel quality measurement is the RLM measurement, and the first cell is a primary secondary cell PSCell and is in a deactivated state. The first cycle is less than or equal to a first threshold, a reporting periodicity of the RLM measurement is max(K⁽¹⁾_{RLM_report}×first configuration periodicity, K⁽²⁾_{RLM_report}×first cycle, first duration), and the first reference signal periodicity is a periodicity of one of the N reference signals; or the first cycle is greater than the first threshold, and the reporting periodicity of the RLM measurement is K⁽³⁾_{RLM_report}×first cycle. K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer. This implementation provides a method for determining the reporting periodicity of the RLM measurement for the primary secondary cell in the deactivated state.

In a possible implementation, the channel quality measurement is the RLM measurement, and the N reference signals include a first reference signal. If the first cycle is less than or equal to a second threshold, an in-sync (IS) evaluation periodicity of the first reference signal is max(K⁽¹⁾_{RLM_eva_in}×max(periodicity of the first reference signal, first cycle), second duration); or if the first cycle is greater than the second threshold, the IS evaluation periodicity of the first reference signal is K⁽²⁾_{RLM_eva_in}×first cycle. K⁽¹⁾_{RLM_eva_in} and K⁽²⁾_{RLM_eva_in} are both coefficients with positive values, and max(parameter 1, parameter 2, ..., parameter n) represents a maximum value in the parameter 1, the parameter 2, ..., and the parameter n, where n is a positive integer. Optionally, the first cell is a primary cell; or the first cell is a primary secondary cell, and the first cell is in an activated state. This implementation provides a method for determining the in-sync evaluation periodicity of the RLM measurement.

In a possible implementation, the channel quality measurement is the RLM measurement, the first cell is a primary secondary cell PSCell and is in a deactivated state, and the N reference signals include a first reference signal. If the first cycle is less than or equal to a second threshold, an IS evaluation periodicity of the first reference signal is max(K⁽¹⁾_{RLM_eva_in}×first configuration periodicity, K⁽²⁾_{RLM_eva_in}×first cycle); or if the first cycle is greater than the second threshold, the IS evaluation periodicity of the first reference signal is max(K⁽³⁾_{RLM_eva_in}×first configuration periodicity, K⁽⁴⁾_{RLM_eva_in}×first cycle). K⁽¹⁾_{RLM_eva_in}, K⁽²⁾_{RLM_eva_in}, K⁽³⁾_{RLM_eva_in}, and K⁽⁴⁾_{RLM_eva_in} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer. This implementation provides a method for determining the in-sync evaluation periodicity of the RLM measurement for the primary secondary cell in the deactivated state.

In a possible implementation, the channel quality measurement is the RLM measurement, and the N reference signals include a first reference signal. If the first cycle is less than or equal to a second threshold, an out-of-sync (Out-of-sync, OOS) evaluation periodicity of the first reference signal is max(K⁽¹⁾_{RLM_eva_out}×max(periodicity of the first reference signal, first cycle), third duration); or if the first cycle is greater than the second threshold, the OOS evaluation periodicity of the first reference signal is K⁽²⁾_{RLM_eva_out}×first cycle. K⁽¹⁾_{RLM_eva_out} and K⁽²⁾_{RLM_eva_out} are both coefficients with positive values, and max(parameter 1, parameter 2, ..., parameter n) represents a maximum value in the parameter 1, the parameter 2, ..., and the parameter n, where n is a positive integer. Optionally, the first cell is a primary cell; or the first cell is a primary secondary cell, and the first cell is in an activated state. This implementation provides a method for determining the out-of-sync evaluation periodicity of the RLM measurement.

In a possible implementation, the channel quality measurement is the RLM measurement, the first cell is a primary secondary cell PSCell and is in a deactivated state, and the N reference signals include a first reference signal. If the first cycle is less than or equal to a second threshold, an OOS evaluation periodicity of the first reference signal is max(K⁽¹⁾_{RLM_eva_out}×first configuration periodicity, K⁽²⁾_{RLM_eva_out}×first cycle); or if the first cycle is greater than the second threshold, the out-of-sync evaluation periodicity of the first reference signal is max(K⁽³⁾_{RLM_eva_out}×first configuration periodicity, K⁽⁴⁾_{RLM_eva_out}×first cycle). K⁽¹⁾_{RLM_eva_out}, K⁽²⁾_{RLM_eva_out}, K⁽³⁾_{RLM_eva_out}, and K⁽⁴⁾_{RLM_eva_out} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer. This implementation provides a method for determining the out-of-sync evaluation periodicity of the RLM measurement for the primary secondary cell in the deactivated state.

In a possible implementation, the channel quality measurement is the RLM measurement, the N reference signals are N synchronization signal/physical broadcast channel blocks (synchronization signal/physical broadcast channel, SSB), the N SSBs include a first SSB, and the method further includes: if the first cycle is less than or equal to a third threshold, and the first cell satisfies a low mobility criterion and/or a high channel quality criterion, when max(periodicity of the first SSB, first cycle) is less than or equal to the third threshold, extending an OOS evaluation periodicity of the first SSB to max(K⁽¹⁾_{PLM_SSB_relax}×fourth duration, K⁽²⁾_{PLM_SSB_relax}×max(periodicity of the first SSB, first cycle)); or if the first cycle is less than or equal to the third threshold, and the first cell satisfies the low mobility criterion and/or the high channel quality criterion, when max(periodicity of the first SSB, first cycle) is greater than the third threshold and less than a fourth threshold, extending the OOS evaluation periodicity of the first SSB to K⁽³⁾_{PLM_SSB_relax}×max(periodicity of the first SSB, first cycle). K⁽¹⁾_{PLM_SSB_relax}, K⁽²⁾_{PLM_SSB_relax}, and K⁽³⁾_{PLM_SSB_relax} are all coefficients with positive values, and max(parameter 1, parameter 2, ..., parameter n) represents a maximum value in the parameter 1, the parameter 2, ..., and the parameter n, where n is a positive integer.

In a possible implementation, the channel quality measurement is the RLM measurement, the N reference signals are N channel state information-reference signals (channel state information-reference signal, CSI-RS), the N CSI-RSs include a first CSI-RS, and the method further includes: if the first cycle is less than or equal to a third threshold, and the first cell satisfies a low mobility criterion and/or a high channel quality criterion, when max(periodicity of the first CSI-RS, first cycle) is less than or equal to the third threshold, extending an OOS evaluation periodicity of the first CSI-RS to max(K⁽¹⁾ _{PLM-CSI-RS_relax}×fourth duration, K⁽²⁾_{PLM_CSI-RS_relax}×max(periodicity of the first CSI-RS, first cycle)), where K⁽¹⁾_{PLM_CSI-RS_relax} and K⁽²⁾_{PLM_CSI-RS_relax} are both coefficients with positive values, and max(parameter 1, parameter 2, ..., parameter n) indicates a maximum value in the parameter 1, the parameter 2, ..., and the parameter n, where n is a positive integer.

In a possible implementation, the channel quality measurement is the BFD measurement. The first cycle is less than or equal to a first threshold, a reporting periodicity of the BFD measurement is max(K⁽¹⁾_{BFD_report}×first reference signal periodicity, K⁽²⁾_{BFD_report}×first cycle), and the first reference signal periodicity is a periodicity of one of the N reference signals; or the first cycle is greater than the first threshold, and the reporting periodicity of the BFD measurement is K⁽³⁾_{BFD_report}×first cycle. K⁽¹⁾_{BFD_report}, K⁽²⁾_{BFD_report}, and K⁽³⁾_{BFD_report} are all coefficients with positive values, and max(parameter 1, parameter 2, ..., parameter n) represents a maximum value in the parameter 1, the parameter 2, ..., and the parameter n, where n is a positive integer. Optionally, the first cell is a primary cell or a secondary cell; or the first cell is a primary secondary cell, and the first cell is in an activated state. This implementation provides a method for determining the reporting periodicity for the BFD measurement.

In a possible implementation, the channel quality measurement is the BFD measurement, and the first cell is a primary secondary cell PSCell and is in a deactivated state. The first cycle is less than or equal to a first threshold, a reporting periodicity of the BFD measurement is max(K⁽¹⁾_{BFD-report}×first configuration periodicity, K⁽²⁾_{BFD_report}×first cycle), and the first reference signal periodicity is a periodicity of one of the N reference signals; or the first cycle is greater than the first threshold, and the reporting periodicity of the BFD measurement is K⁽³⁾_{BFD_report}×first cycle. K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer. This implementation provides a method for determining the reporting periodicity of the BFD measurement for the primary secondary cell in the deactivated state.

In a possible implementation, the channel quality measurement is the BFD measurement, and the N reference signals include a first reference signal. If the first cycle is less than or equal to a second threshold, an evaluation periodicity of the first reference signal is max(K⁽¹⁾_{BFD_eva}×max(periodicity of the first reference signal, first cycle), sixth duration); or if the first cycle is greater than the second threshold, the evaluation periodicity of the first reference signal is K⁽²⁾_{BFD_eva}×first cycle.

K⁽¹⁾_{BFD_eva} and K⁽²⁾_{BFD_eva} are both coefficients with positive values, and max(parameter 1, parameter 2, ..., parameter n) represents a maximum value in the parameter 1, the parameter 2, ..., and the parameter n, where n is a positive integer. Optionally, the first cell is a primary cell or a secondary cell; or the first cell is a primary secondary cell, and the first cell is in an activated state. This implementation provides a method for determining the evaluation periodicity of the BFD measurement.

In a possible implementation, the channel quality measurement is the BFD measurement, the first cell is a primary secondary cell PSCell and is in a deactivated state, and the N reference signals include a first reference signal. If the first cycle is less than or equal to a second threshold, an evaluation periodicity of the first reference signal is K⁽³⁾_{BFD_eva}×max(first configuration periodicity, first cycle); or if the first cycle is greater than the second threshold, the evaluation periodicity of the first reference signal is K⁽⁴⁾_{BFD_eva}×max(first configuration periodicity, first cycle). K⁽³⁾_{BFD_eva} and K⁽⁴⁾_{BFD_eva} are both coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer. This implementation provides a method for determining the evaluation periodicity of the BFD measurement for the primary secondary cell in the deactivated state.

In a possible implementation, the channel quality measurement is the BFD measurement, the N reference signals are N SSBs, the N SSBs include a first SSB, and the method further includes: if the first cycle is less than or equal to a third threshold, and the first cell satisfies a low mobility criterion and/or a high channel quality criterion, when max(periodicity of the first SSB, first cycle) is less than or equal to the third threshold, extending an evaluation periodicity of the first SSB to max(K⁽¹⁾_{BFD_SSB_relax}×seventh duration, K⁽²⁾_{BFD_SSB_relax}×max(periodicity of the first SSB, first cycle)); or if the first cycle is less than or equal to the third threshold, and the first cell satisfies the low mobility criterion and/or the high channel quality criterion, when max(periodicity of the first SSB, first cycle) is greater than the third threshold and less than a fourth threshold, extending the evaluation periodicity of the first SSB to max(K⁽³⁾_{BFD_SSB_relax}×max(periodicity of the first SSB, first cycle), eighth duration). K⁽¹⁾_{BFD_SSB_relax}, K⁽²⁾_{BFD_SSB_relax}, and K⁽³⁾_{BFD_SSB_relax} are all coefficients with positive values, and max(parameter 1, parameter 2, ..., parameter n) represents a maximum value in the parameter 1, the parameter 2, ..., and the parameter n, where n is a positive integer.

In a possible implementation, the channel quality measurement is the BFD measurement, the N reference signals are N CSI-RSs, the N CSI-RSs include a first CSI-RS, and the method further includes: if the first cycle is less than or equal to a third threshold, and the first cell satisfies a low mobility criterion and/or a high channel quality criterion, when max(periodicity of the first CSI-RS, first cycle) is less than or equal to the third threshold, extending an OOS evaluation periodicity of the first CSI-RS to max(K⁽¹⁾_{BFD_CSI-RS_relax}×seventh duration, K⁽²⁾_{BFD_CSI-RS_relax}×max(periodicity of the first CSI-RS, first cycle)). K⁽¹⁾_{BFD_CSI-RS_relax} and K⁽²⁾_{BFD_CSI-RS_relax} are both coefficients with positive values, and max(parameter 1, parameter 2, ..., parameter n) represents a maximum value in the parameter 1, the parameter 2, ..., and the parameter n, where n is a positive integer.

In a possible implementation, the channel quality measurement is the BFR measurement. If the first cycle is less than or equal to a second threshold, an evaluation periodicity of the first reference signal is max(K⁽¹⁾_{BFR_eva}×periodicity of the first reference signal, eighth duration); or if the first cycle is greater than the second threshold, the evaluation periodicity of the first reference signal is K⁽²⁾_{BFR_eva}×first cycle. K⁽¹⁾_{BFR_eva} and K⁽²⁾_{BFR_eva} are both coefficients with positive values, and max(parameter 1, parameter 2, ..., parameter n) represents a maximum value in the parameter 1, the parameter 2, ..., and the parameter n, where n is a positive integer. This implementation provides a method for determining the evaluation periodicity of the BFR measurement.

In a possible implementation, the first channel is a downlink channel, or the first channel includes a downlink channel and an uplink channel. The uplink channel includes one or more of the following channel types: a configured grant physical uplink shared channel (configured grant PUSCH, CG PUSCH, where PUSCH is the abbreviation of physical uplink shared channel in English), a hybrid automatic repeat request acknowledgment (hybrid automatic repeat request-acknowledge, HARQ-ACK) of a semi-persistent scheduled physical downlink shared channel (semi persistent scheduled physical downlink shared channel, SPS PDSCH), a scheduling request (scheduling request, SR), a physical random access channel (physical random access channel, PRACH), a random access message A, or a random access message 3. Alternatively, the downlink channel includes one or more of the following channel types: a physical downlink control channel (PDCCH) scrambled by a modulation and coding scheme-cell-radio network temporary identifier (modulation and coding scheme-cell-RNTI, MCS-C-RNTI), a PDCCH scrambled by a power saving-radio network temporary identifier (power saving-RNTI, PS-RNTI), a PDCCH scrambled by a system information-radio network temporary identifier (system information-RNTI, SI-RNTI), a PDCCH scrambled by a random access-radio network temporary identifier (random access-RNTI, RA-RNTI), a PDCCH scrambled by a temporary cell-radio network temporary identifier (temporary cell-RNTI, TC-RNTI), a PDCCH scrambled by a paging-radio network temporary identifier (paging-RNTI, P-RNTI), a PDCCH scrambled by a paging early indication-radio network temporary identifier (paging early indication-RNTI, PEI-RNTI), an SSB, system information, a paging message, a random access message 2, a random access message 4, a random access message B, a BFR, or an SPS PDSCH.

According to a second aspect, a channel quality measurement method is provided. The method is applied to a terminal device, and the method includes: receiving first indication information and second indication information that are sent by a network device, where the first indication information indicates that a first channel is not transmitted in a first cell in a first time period of a first cycle and indicates that the first channel is transmitted in the first cell in a second time period of the first cycle, and the second indication information indicates that a second channel is not transmitted in the first cell in a third time period of a second cycle and indicates that the second channel is transmitted in the first cell in a fourth time period of the second cycle; determining a reporting periodicity and/or an evaluation periodicity of channel quality measurement based on the first cycle and/or the second cycle, where the channel quality measurement is RLM measurement, BFD measurement, or BFR measurement; and determining a measurement result of the channel quality measurement based on N reference signals, where N is a positive integer.

Optionally, the first indication information indicates a cell DTX/DRX configuration, and the second indication information indicates a C-DRX configuration.

In a possible implementation, determining the reporting periodicity of the channel quality measurement based on the first cycle and/or the second cycle includes: determining the reporting periodicity of the channel quality measurement based on a first parameter; and determining the evaluation periodicity of the channel quality measurement based on the first cycle and/or the second cycle includes: determining the evaluation periodicity of the channel quality measurement based on a second parameter. The first parameter is one of the following: the first parameter is the first cycle; the first parameter is the second cycle; the first parameter is min(Q1×first cycle, Q2×second cycle); the first parameter is max(Q1×first cycle, Q2×second cycle); and the first parameter is LCM(Q1×first cycle, Q2×second cycle). The second parameter is one of the following: the second parameter is the first cycle; the second parameter is the second cycle; the second parameter is min(P1×first cycle, P2×second cycle); the second parameter is max(P1×first cycle, P2×second cycle); and the second parameter is LCM(P1×first cycle, P2×second cycle). Q1, Q2, P1, and P2 are all coefficients with positive values, max(parameter 1, parameter 2, ..., parameter n) represents a maximum value in the parameter 1, the parameter 2, ..., and the parameter n, min(parameter 1, parameter 2, ..., parameter n) represents a minimum value in the parameter 1, the parameter 2, ..., and the parameter n, and LCM(parameter 1, parameter 2, ..., parameter n) represents a least common multiple of the parameter 1, the parameter 2, ..., and the parameter n.

In a possible implementation, the channel quality measurement is the RLM measurement. The first parameter is less than or equal to a first threshold, a reporting periodicity of the RLM measurement is max(K⁽¹⁾_{RLM_report}×first reference signal periodicity, K⁽²⁾_{RLM_report}×first parameter, first duration), and the first reference signal periodicity is a periodicity of one of the N reference signals; or the first parameter is greater than the first threshold, and the reporting periodicity of the RLM measurement is K⁽³⁾_{RLM_report}×first parameter. K⁽¹⁾_{RLM_report}, K⁽²⁾_{RLM_report}, and K⁽³⁾_{RLM_report} are all coefficients with positive values, and max(parameter 1, parameter 2, ..., parameter n) represents a maximum value in the parameter 1, the parameter 2, ..., and the parameter n, where n is a positive integer. Optionally, the first cell is a primary cell; or the first cell is a primary secondary cell, and the first cell is in an activated state.

In a possible implementation, the channel quality measurement is the RLM measurement, and the first cell is a primary secondary cell PSCell and is in a deactivated state. The first parameter is less than or equal to a first threshold, a reporting periodicity of the RLM measurement is max(K⁽¹⁾_{RLM_report}×first configuration periodicity, K⁽²⁾_{RLM_report}×first parameter, first duration), and the first reference signal periodicity is a periodicity of one of the N reference signals; or the first parameter is greater than the first threshold, and the reporting periodicity of the RLM measurement is K⁽³⁾_{RLM_report}×first parameter. K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer.

In a possible implementation, the channel quality measurement is the RLM measurement, and the N reference signals include a first reference signal. If the second parameter is less than or equal to a second threshold, an in-sync IS evaluation periodicity of the first reference signal is max(K⁽¹⁾_{RLM_eva_in}×max(periodicity of the first reference signal, second parameter), second duration); or if the second parameter is greater than the second threshold, the IS evaluation periodicity of the first reference signal is K⁽²⁾_{RLM_eva_in}×second parameter. K⁽¹⁾_{RLM_eva_in} and K⁽²⁾_{RLM_eva_in} are both coefficients with positive values, and max(parameter 1, parameter 2, ..., parameter n) represents a maximum value in the parameter 1, the parameter 2, ..., and the parameter n, where n is a positive integer. Optionally, the first cell is a primary cell; or the first cell is a primary secondary cell, and the first cell is in an activated state.

In a possible implementation, the channel quality measurement is the RLM measurement, the first cell is a primary secondary cell PSCell and is in a deactivated state, and the N reference signals include a first reference signal. If the second parameter is less than or equal to a second threshold, an IS evaluation periodicity of the first reference signal is max(K⁽¹⁾_{RLM_eva_in}×first configuration periodicity, K⁽²⁾_{RLM_eva_in}×second parameter); or if the second parameter is greater than the second threshold, the IS evaluation periodicity of the first reference signal is max(K⁽²⁾_{RLM_eva_in}×first configuration periodicity, K⁽⁴⁾_{RLM_eva_in}×second parameter). K⁽¹⁾_{RLM_eva_in}, K⁽²⁾_{RLM_eva_}in, K⁽³⁾_{RLM_eva_in}, and K⁽⁴⁾_{RLM_eva_in} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer.

In a possible implementation, the channel quality measurement is the RLM measurement, and the N reference signals include a first reference signal. If the second parameter is less than or equal to a second threshold, an OOS evaluation periodicity of the first reference signal is max(K⁽¹⁾_{RLM_eva_out}×max(periodicity of the first reference signal, second parameter), third duration); or if the second parameter is greater than the second threshold, the OOS evaluation periodicity of the first reference signal is K⁽²⁾_{RLM_eva_out}×second parameter. K⁽¹⁾_{RLM_eva_out} and K⁽²⁾_{RLM_eva_out} are both coefficients with positive values, and max(parameter 1, parameter 2, ..., parameter n) represents a maximum value in the parameter 1, the parameter 2, ..., and the parameter n, where n is a positive integer. Optionally, the first cell is a primary cell; or the first cell is a primary secondary cell, and the first cell is in an activated state.

In a possible implementation, the channel quality measurement is the RLM measurement, the first cell is a primary secondary cell PSCell and is in a deactivated state, and the N reference signals include a first reference signal. If the second parameter is less than or equal to a second threshold, an OOS evaluation periodicity of the first reference signal is max(K⁽¹⁾_{RLM_eva_out}×first configuration periodicity, K⁽²⁾_{RLM_eva_out}×second parameter); or if the second parameter is greater than the second threshold, the OOS evaluation periodicity of the first reference signal is max(K⁽³⁾_{RLM_eva_out}×first configuration periodicity, K⁽⁴⁾_{RLM_eva_out}×second parameter). K⁽¹⁾_{RLM_eva_out}, K⁽²⁾_{RLM_eva_out}, K⁽³⁾_{RLM_eva_out}, and K⁽⁴⁾_{RLM_eva_out} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer.

In a possible implementation, the channel quality measurement is the RLM measurement. The N reference signals are N SSBs, the N SSBs include a first SSB, and the method further includes: if the second parameter is less than or equal to a third threshold, and the first cell satisfies a low mobility criterion and/or a high channel quality criterion, when max(periodicity of the first SSB, second parameter) is less than or equal to the third threshold, extending an OOS evaluation periodicity of the first SSB to max(K⁽¹⁾_{PLM_SSB_relax}×fourth duration, K⁽²⁾_{PLM_SSB-relax}×max(periodicity of the first SSB, second parameter)); or if the second parameter is less than or equal to the third threshold, and the first cell satisfies the low mobility criterion and/or the high channel quality criterion, when max(periodicity of the first SSB, second parameter) is greater than the third threshold and less than a fourth threshold, extending the OOS evaluation periodicity of the first SSB to K⁽³⁾_{PLM_SSB_relax}×max(periodicity of the first SSB, second parameter). K⁽¹⁾_{PLM_SSB_relax}, K⁽²⁾_{PLM_SSB_relax}, and K⁽³⁾_{PLM_SSB_relax} are all coefficients with positive values, and max(parameter 1, parameter 2, ..., parameter n) represents a maximum value in the parameter 1, the parameter 2, ..., and the parameter n, where n is a positive integer.

In a possible implementation, the channel quality measurement is the RLM measurement, the N reference signals are N CSI-RSs, the N CSI-RSs include a first CSI-RS, and the method further includes: if the second parameter is less than or equal to a third threshold, and the first cell satisfies a low mobility criterion and/or a high channel quality criterion, when max(periodicity of the first CSI-RS, second parameter) is less than or equal to the third threshold, extending an OOS evaluation periodicity of the first CSI-RS to max(K⁽¹⁾_{PLM_CSI-RS_relax}×fourth duration, K⁽²⁾_{PLM_CSI-RS-relax}×max(periodicity of the first CSI-RS, second parameter)). K⁽¹⁾_{PLM_CSI-RS_relax} and K⁽²⁾_{PLM_CSI-RS_relax} are both coefficients with positive values, and max(parameter 1, parameter 2, ..., parameter n) represents a maximum value in the parameter 1, the parameter 2, ..., and the parameter n, where n is a positive integer.

In a possible implementation, the channel quality measurement is the BFD measurement. The first parameter is less than or equal to a first threshold, a reporting periodicity of the BFD measurement is max(K⁽¹⁾_{BFD_report}×first reference signal periodicity, K⁽²⁾_{BFD_report}×first parameter), and the first reference signal periodicity is a periodicity of one of the N reference signals; or the first parameter is greater than the first threshold, and the reporting periodicity of the BFD measurement is K⁽³⁾_{BFD_report}×first parameter. K⁽¹⁾_{BFD_report}, K⁽²⁾_{BFD_report}, and K⁽³⁾_{BFD_report} are all coefficients with positive values, and max(parameter 1, parameter 2, ..., parameter n) represents a maximum value in the parameter 1, the parameter 2, ..., and the parameter n, where n is a positive integer. Optionally, the first cell is a primary cell or a secondary cell; or the first cell is a primary secondary cell, and the first cell is in an activated state.

In a possible implementation, the channel quality measurement is the BFD measurement, and the first cell is a primary secondary cell PSCell and is in a deactivated state. The first parameter is less than or equal to a first threshold, a reporting periodicity of the BFD measurement is max(K⁽¹⁾_{BFD_report}×first configuration periodicity, K⁽²⁾_{BFD_report}×first parameter), and the first reference signal periodicity is a periodicity of one of the N reference signals; or the first parameter is greater than the first threshold, and the reporting periodicity of the BFD measurement is K⁽³⁾_{BFD_report}×first parameter. K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer.

In a possible implementation, the channel quality measurement is the BFD measurement, and the N reference signals include a first reference signal. If the second parameter is less than or equal to a second threshold, an evaluation periodicity of the first reference signal is max(K⁽¹⁾_{BFD_eva}×max(periodicity of the first reference signal, second parameter)); or if the second parameter is greater than the second threshold, the evaluation periodicity of the first reference signal is K⁽²⁾_{BFD_eva}×second parameter. K⁽¹⁾_{BFD_eva} and K⁽²⁾_{BFD_eva} are both coefficients with positive values, and max(parameter 1, parameter 2, ..., parameter n) represents a maximum value in the parameter 1, the parameter 2, ..., and the parameter n, where n is a positive integer. Optionally, the first cell is a primary cell or a secondary cell; or the first cell is a primary secondary cell, and the first cell is in an activated state.

In a possible implementation, the channel quality measurement is the BFD measurement, the first cell is a primary secondary cell PSCell and is in a deactivated state, and the N reference signals include a first reference signal. If the second parameter is less than or equal to a second threshold, an evaluation periodicity of the first reference signal is K⁽³)B_{FD_eva}×max(first configuration periodicity, second parameter); or if the second parameter is greater than the second threshold, the evaluation periodicity of the first reference signal is K⁽⁴⁾_{BFD_eva}×max(first configuration periodicity, second parameter). K⁽³⁾_{BFD_eva} and K⁽⁴⁾_{BFD_eva} are both coefficients with positive values, the first configuration periodicity is a preset value or is configured by the network device, and max(parameter 1, parameter 2, ..., parameter n) represents a maximum value in the parameter 1, the parameter 2, ..., and the parameter n, where n is a positive integer.

In a possible implementation, the channel quality measurement is the BFD measurement, the N reference signals are N SSBs, the N SSBs include a first SSB, and the method further includes: if the second parameter is less than or equal to a third threshold, and the first cell satisfies a low mobility criterion and/or a high channel quality criterion, when max(periodicity of the first SSB, second parameter) is less than or equal to the third threshold, extending an evaluation periodicity of the first SSB to max(K⁽¹⁾_{BFD_SSB_relax}×seventh duration, K⁽²⁾_{BFD_SSB_relax}×max(periodicity of the first SSB, second parameter)); or if the second parameter is less than or equal to the third threshold, and the first cell satisfies the low mobility criterion and/or the high channel quality criterion, when max(periodicity of the first SSB, second parameter) is greater than the third threshold and less than a fourth threshold, extending the evaluation periodicity of the first SSB to max(K⁽³⁾_{BFD_SSB_relax}×max(periodicity of the first SSB, second parameter), eighth duration). K⁽¹⁾_{BFD_SSB_relax}, K⁽²⁾_{BFD_SSB_relax}, and K⁽³⁾_{BFD_SSB_relax} are all coefficients with positive values, and max(parameter 1, parameter 2, ..., parameter n) represents a maximum value in the parameter 1, the parameter 2, ..., and the parameter n, where n is a positive integer.

In a possible implementation, the channel quality measurement is the BFD measurement, the N reference signals are N CSI-RSs, the N CSI-RSs include a first CSI-RS, and the method further includes: if the second parameter is less than or equal to a third threshold, and the first cell satisfies a low mobility criterion and/or a high channel quality criterion, when max(periodicity of the first CSI-RS, second parameter) is less than or equal to the third threshold, extending an OOS evaluation periodicity of the first CSI-RS to max(K⁽¹⁾_{BFD_CSI-RS_relax}×seventh duration, K⁽²⁾_{BFD_CSI-RS_relax}×max(periodicity of the first CSI-RS, second parameter)). K⁽¹⁾_{BFD_CSI-RS_relax} and K⁽²⁾_{BFD_CSI-RS_relax} are both coefficients with positive values, and max(parameter 1, parameter 2, ..., parameter n) represents a maximum value in the parameter 1, the parameter 2, ..., and the parameter n, where n is a positive integer.

In a possible implementation, the channel quality measurement is the BFR measurement. If the second parameter is less than or equal to a second threshold, an evaluation periodicity of the first reference signal is max(K⁽¹⁾_{BFR_eva}×periodicity of the first reference signal, eighth duration); or if the second parameter is greater than the second threshold, the evaluation periodicity of the first reference signal is K⁽²⁾_{BFR_eva}×second parameter. K⁽¹⁾_{BFR_eva} and K⁽²⁾_{BFR_eva} are both coefficients with positive values, and max(parameter 1, parameter 2, ..., parameter n) represents a maximum value in the parameter 1, the parameter 2, ..., and the parameter n, where n is a positive integer.

In a possible implementation, the first channel is a downlink channel, or the first channel includes a downlink channel and an uplink channel. The uplink channel includes one or more of the following channel types: a CG PUSCH, a HARQ-ACK of an SPS PDSCH, an SR, a PRACH, a random access message A, and a random access message 3. Alternatively, the downlink channel includes one or more of the following channel types: a PDCCH scrambled by an MCS-C-RNTI, a PDCCH scrambled by a PS-RNTI, a PDCCH scrambled by an SI-RNTI, a PDCCH scrambled by an RA-RNTI, a PDCCH scrambled by a TC-RNTI, a PDCCH scrambled by a P-RNTI, a PDCCH scrambled by a PEI-RNTI, an SSB, system information, a paging message, a random access message 2, a random access message 4, a random access message B, BFR, or an SPS PDSCH.

According to a third aspect, a channel quality measurement method is provided, applied to a network device. The method includes: The network device sends first indication information to a terminal device, where the first indication information indicates that a first channel is not transmitted in a first cell in a first time period of a first cycle and indicates that the first channel is transmitted in the first cell in a second time period of the first cycle.

Optionally, the first indication information indicates a cell DTX/DRX configuration.

Optionally, the first channel is a downlink channel, or the first channel includes a downlink channel and an uplink channel. The uplink channel includes one or more of the following channel types: a CG PUSCH, a HARQ-ACK of an SPS PDSCH, an SR, a PRACH, a random access message A, and a random access message 3. Alternatively, the downlink channel includes one or more of the following channel types: a PDCCH scrambled by an MCS-C-RNTI, a PDCCH scrambled by a PS-RNTI, a PDCCH scrambled by an SI-RNTI, a PDCCH scrambled by an RA-RNTI, a PDCCH scrambled by a TC-RNTI, a PDCCH scrambled by a P-RNTI, a PDCCH scrambled by a PEI-RNTI, an SSB, system information, a paging message, a random access message 2, a random access message 4, a random access message B, BFR, or an SPS PDSCH.

Optionally, the method further includes: The network device receives channel quality information reported by the terminal device based on a reporting periodicity of channel quality measurement, where the channel quality information is obtained by the terminal device by measuring a reference signal in an evaluation periodicity of the channel quality measurement. Optionally, the reporting periodicity of the channel quality measurement is the reporting periodicity of the channel quality measurement according to any possible implementation of the first aspect, and the evaluation periodicity of the channel quality measurement is the evaluation periodicity of the channel quality measurement according to any possible implementation of the first aspect.

In a possible implementation, the method further includes: The network device sends second indication information to the terminal device, where the second indication information indicates that a second channel is not transmitted in the first cell in a third time period of a second cycle and indicates that the second channel is transmitted in the first cell in a fourth time period of the second cycle.

Optionally, the second indication information indicates a connected C-DRX configuration.

Optionally, the method further includes: The network device receives channel quality information reported by the terminal device based on a reporting periodicity of channel quality measurement, where the channel quality information is obtained by the terminal device by measuring a reference signal in an evaluation periodicity of the channel quality measurement. Optionally, the reporting periodicity of the channel quality measurement is the reporting periodicity of the channel quality measurement according to any possible implementation of the second aspect, and the evaluation periodicity of the channel quality measurement is the evaluation periodicity of the channel quality measurement according to any possible implementation of the second aspect.

According to a fourth aspect, a channel quality measurement method is provided. The method includes: A network device sends first indication information to a terminal device, where the first indication information indicates that a first channel is not transmitted in a first cell in a first time period of a first cycle and indicates that the first channel is transmitted in the first cell in a second time period of the first cycle. The terminal device receives the first indication information, and determines a reporting periodicity and/or an evaluation periodicity of channel quality measurement based on the first cycle, where the channel quality measurement is RLM measurement, BFD measurement, or BFR measurement; and determines a measurement result of the channel quality measurement based on N reference signals, where N is a positive integer. Optionally, the network device receives channel quality information reported by the terminal device based on the reporting periodicity of the channel quality measurement, where the channel quality information is obtained by the terminal device by measuring a reference signal in the evaluation periodicity of the channel quality measurement. A specific implementation in which the terminal device determines the reporting periodicity and/or the evaluation periodicity of the channel quality measurement based on the first cycle is the method according to any possible implementation of the first aspect.

According to a fifth aspect, a channel quality measurement method is provided. The method includes: A network device sends first indication information and second indication information to a terminal device, where the first indication information indicates that a first channel is not transmitted in a first cell in a first time period of a first cycle and indicates that the first channel is transmitted in the first cell in a second time period of the first cycle, and the second indication information indicates that a second channel is not transmitted in the first cell in a third time period of a second cycle and indicates that the second channel is transmitted in the first cell in a fourth time period of the second cycle. The terminal device receives the first indication information, and determines a reporting periodicity and/or an evaluation periodicity of channel quality measurement based on the first cycle and/or the second cycle, where the channel quality measurement is RLM measurement, BFD measurement, or BFR measurement; and determines a measurement result of the channel quality measurement based on N reference signals, where N is a positive integer. Optionally, the network device receives channel quality information reported by the terminal device based on the reporting periodicity of the channel quality measurement, where the channel quality information is obtained by the terminal device by measuring a reference signal in the evaluation periodicity of the channel quality measurement. A specific implementation in which the terminal device determines the reporting periodicity and/or the evaluation periodicity of the channel quality measurement based on the first cycle is the method according to any possible implementation of the second aspect.

According to a sixth aspect, a communication system is provided. The communication system includes a network device and a terminal device. The network device may perform the method performed by the network device in the fourth aspect or the fifth aspect, and the terminal device may perform the method in any one of the first aspect or the second aspect.

According to a seventh aspect, a communication apparatus is provided, including a unit or a module configured to perform the method according to any implementation of the first aspect, or including a unit or a module configured to perform the method according to any implementation of the second aspect.

According to an eighth aspect, a communication apparatus is provided. The communication apparatus includes a processing unit and a transceiver unit. The transceiver unit is configured to receive first indication information sent by a network device, where the first indication information indicates that a first channel is not transmitted in a first cell in a first time period of a first cycle and indicates that the first channel is transmitted in the first cell in a second time period of the first cycle. The processing unit is configured to: determine a reporting periodicity and/or an evaluation periodicity of channel quality measurement based on the first cycle, where the channel quality measurement is RLM measurement, BFD measurement, or BFR measurement; and determine a measurement result of the channel quality measurement based on N reference signals, where N is a positive integer.

Optionally, the reporting periodicity of the channel quality measurement is the reporting periodicity of the channel quality measurement according to any possible implementation of the first aspect, and the evaluation periodicity of the channel quality measurement is the evaluation periodicity of the channel quality measurement according to any possible implementation of the first aspect.

According to a ninth aspect, a communication apparatus is provided. The communication apparatus includes a processing unit and a transceiver unit. The transceiver unit is configured to receive first indication information and second indication information that are sent by a network device, where the first indication information indicates that a first channel is not transmitted in a first cell in a first time period of a first cycle and indicates that the first channel is transmitted in the first cell in a second time period of the first cycle, and the second indication information indicates that a second channel is not transmitted in the first cell in a third time period of a second cycle and indicates that the second channel is transmitted in the first cell in a fourth time period of the second cycle. The processing unit is configured to: determine a reporting periodicity and/or an evaluation periodicity of channel quality measurement based on the first cycle and/or the second cycle, where the channel quality measurement is RLM measurement, BFD measurement, or BFR measurement; and determine a measurement result of the channel quality measurement based on N reference signals, where N is a positive integer.

Optionally, the reporting periodicity of the channel quality measurement is the reporting periodicity of the channel quality measurement according to any possible implementation of the second aspect, and the evaluation periodicity of the channel quality measurement is the evaluation periodicity of the channel quality measurement according to any possible implementation of the second aspect.

According to a tenth aspect, a communication apparatus is provided, including one or more processors and one or more memories. The one or more memories store one or more programs, and when the program is executed by the one or more processors, the apparatus is enabled to perform the method according to any implementation of the first aspect, or perform the method according to any implementation of the second aspect.

According to an eleventh aspect, a chip system is provided. The chip system includes at least one chip and a memory, and the at least one chip is configured to read and execute a program stored in the memory, to implement the method according to any implementation of the first aspect, or implement the method according to any implementation of the second aspect.

According to a twelfth aspect, a readable storage medium is provided. The readable storage medium includes a program, and when the program runs on an apparatus, the apparatus is enabled to perform the method according to any implementation of the first aspect, or perform the method according to any implementation of the second aspect.

According to a thirteenth aspect, a program product is provided. When the program product runs on an apparatus, the apparatus is enabled to perform the method according to any implementation of the first aspect, or perform the method according to any implementation of the second aspect.

### BRIEF DESCRIPTION OF DRAWINGS

FIG. 1 is a diagram of an architecture of a mobile communication system to which an embodiment of this application is applied;
FIG. 2 is a diagram of a reporting periodicity and an evaluation periodicity of RLM measurement;
FIG. 3 is a diagram of active time and inactive time in a cell DTX/DRX cycle;
FIG. 4 is a diagram of active time and inactive time in a C-DRX cycle;
FIG. 5 is a schematic flowchart of a channel quality measurement method according to an embodiment of this application;
FIG. 6 is a diagram of separately enabling different cell DTX/DRX configurations in different cells by using first indication information according to an embodiment of this application;
FIG. 7 is a diagram of changes of a reporting periodicity and an evaluation periodicity of RLM measurement after a first cell enables cell DTX/DRX according to an embodiment of this application;
FIG. 8 is a schematic flowchart of another channel quality measurement method according to an embodiment of this application;
FIG. 9 is a diagram of activity time determined by a terminal device and a network device when cell DTX/DRX activity time overlaps C-DRX activity time according to an embodiment of this application;
FIG. 10 is a diagram of activity time determined by a terminal device and a network device when cell DTX/DRX activity time overlaps C-DRX activity time according to an embodiment of this application;
FIG. 11 is a diagram of changes of a reporting periodicity and an evaluation periodicity of RLM measurement after a first cell enables cell DTX/DRX and C-DRX according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

Embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, and a fifth generation (5th generation, 5G) system or new radio (new radio, NR) system, or is applied to a future communication system or another similar communication system.

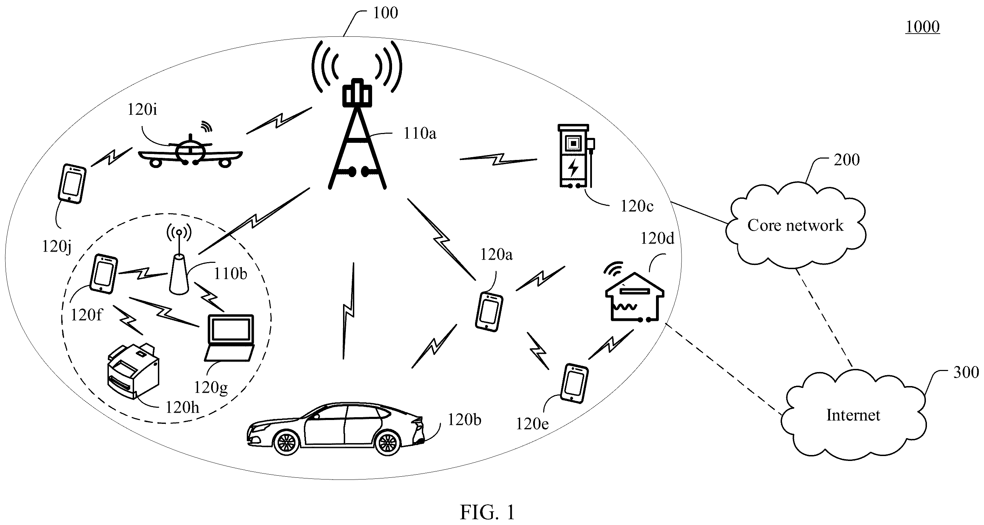

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the network device is a radio access network device.

The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at fixed locations, or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal 120j that accesses the radio access network 100 via 120i, the uncrewed aerial vehicle 120i is a network device. However, for the network device 110a, 120i is a terminal. That is, 110a and 120i communicate with each other according to a radio air interface protocol. Certainly, 110a and 120i may alternatively communicate with each other according to an interface protocol between network devices. In this case, compared with 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal may alternatively be performed by a module (for example, a chip or a modem) in the terminal, or may be performed by an apparatus including the function of the terminal.

To make the objectives, technical solutions, and advantages of this application clearer, the following further describes this application in detail with reference to the accompanying drawings. A specific operation method in a method embodiment may also be applied to an apparatus embodiment or a system embodiment.

The following describes some terms in embodiments of this application, to facilitate understanding of a person skilled in the art.

### (1) Radio network temporary identifier (radio network temporary identifier, RNTI)

The RNTI is used to distinguish or identify a connected terminal device in a cell, a specific radio channel, a group of terminal devices in a paging case, a group of terminal devices that receive power control parameters, and system information sent by a network device to all terminal devices. The RNTI may be a 16-bit identifier, and a value of the RNTI depends on a type of the RNTI. For example, an RNTI used for paging (paging) is denoted as a P-RNTI. In addition, there is a cell radio network temporary identifier (cell radio network temporary identifier, C-RNTI) used for data scheduling, a modulation and coding scheme cell radio network temporary identifier (modulation and coding scheme cell radio network temporary identifier, MCS-C-RNTI), a configured scheduling radio network temporary identifier (configured scheduling radio network temporary identifier, CS-RNTI), and the like.

### (2) Reference signal

A reference signal is a known signal provided by a transmitting end for a receiving end for channel estimation or channel sounding. In embodiments of this application, the reference signal may be used for channel quality measurement. For example, the reference signal used for channel quality measurement may include a CSI-RS or an SSB.

### (3) RLM measurement

RLM is a procedure in which a terminal device in a radio resource control (radio resource control, RRC) connected state (RRC_CONNECTED) monitors quality of a downlink radio link of a special cell (special Cell, SPCell). The SPCell may be a primary cell (primary cell, PCell) or a primary secondary cell (primary secondary cell, PSCell).

An RLM reference signal (RLM reference signal, RLM-RS) may be obtained by using a higher layer configuration, or determined by the terminal device based on a transmission configuration indication (transmission configuration indication, TCI) state configured for receiving a physical downlink control channel (physical downlink control channel, PDCCH). The RLM-RS may be an SSB or a periodic CSI-RS. For each RLM-RS, an in-sync (In-sync, IS) threshold Qᵢₙ and an out-of-sync (OOS) threshold Qₒᵤₜ need to be determined. The in-sync threshold and the out-of-sync threshold are indicators for measuring channel quality. A signal compared with the in-sync threshold or the out-of-sync threshold may be reference signal received power (reference signal received power, RSRP), reference signal received quality (reference signal received quality, RSRQ), a signal to interference plus noise ratio (signal to interference plus noise ratio, SINR), a signal-to-noise ratio (signal-noise-ratio, SNR), or the like. For each RLM-RS, an in-sync threshold and an out-of-sync threshold corresponding to the RLM-RS are obtained through calculation based on a preset condition and a preset block error rate (block error rate, BLER).

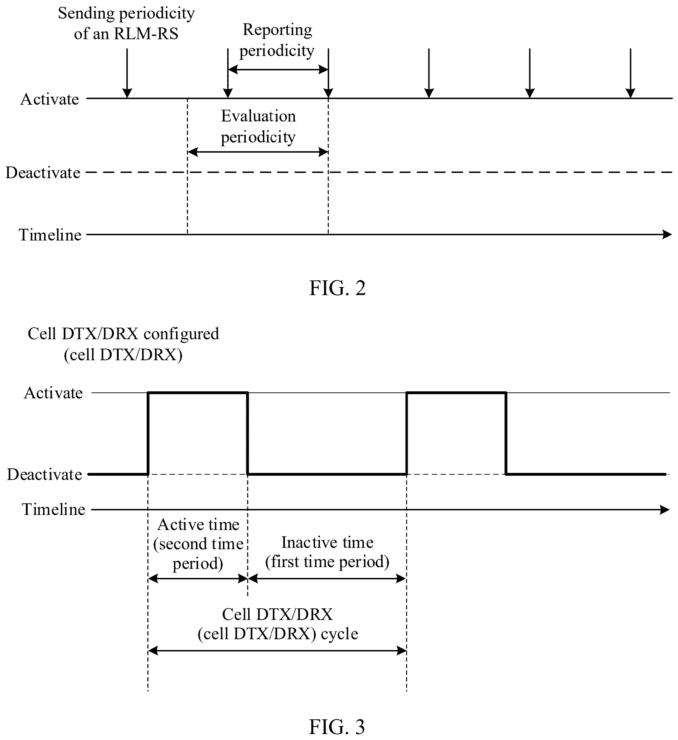

Based on the configuration, the terminal device may measure the RLM-RS. The RLM measurement procedure involves two periodicities: evaluation periodicity and reporting periodicity. The evaluation periodicity includes an in-sync evaluation periodicity and an out-of-sync evaluation periodicity. The reporting periodicity means that the terminal device sends an in-sync/out-of-sync (IS/OOS) indication from a physical layer of the terminal device to an RRC layer of the terminal device at a corresponding interval. The evaluation periodicity means that the measurement result corresponding to the RLM-RS in previous corresponding duration is used to calculate channel quality at each reporting moment. For example, FIG. 2 shows a reporting periodicity and an evaluation periodicity of RLM measurement. As shown in FIG. 2, the terminal device periodically reports an IS/OOS state from the physical layer to the RRC layer. Each time the terminal device reports the IS/OOS state, channel quality of each RLM-RS in a maintained window is calculated based on the window (a window length is the evaluation periodicity). The reporting periodicity of the RLM measurement is configured for the terminal device. That is, reporting periodicities of all RLM-RSs are the same. The evaluation periodicity of the RLM measurement is separately configured for each RLM-RS. That is, for different RLM-RSs, evaluation periodicities may be different. For each RLM-RS, an in-sync evaluation periodicity and an out-of-sync evaluation periodicity are independently configured. That is, for one RLM-RS, an in-sync evaluation periodicity and an out-of-sync evaluation periodicity may be different.

### (4) BFD measurement

BFD is a procedure in which a terminal device in an RRC_CONNECTED state monitors a beam state, and is mainly used to determine whether to send a beam failure (beam failure). The BFD procedure may be triggered by a MAC layer under control. After a beam failure (beam failure) occurs on the terminal device, the terminal device may attempt to restore a normal connection in a beam failure recovery (beam failure recovery) manner. A BFD reference signal (BFD reference signal, BFD-RS) may be an SSB or a periodic CSI-RS (periodic CSI-RS). For SPCells (including a PCell and a PSCell), an SSB or a periodic CSI-RS may be configured. For a secondary cell (secondary Cell, SCell), only a periodic CSI-RS can be configured.

A channel quality threshold (represented as Q_{out_LR}) needs to be independently determined for each BFD-RS. The channel quality threshold Q_{out_LR} is an indicator for channel quality measurement, and a signal may be compared with the channel quality threshold in RSRP, RSRQ, SNR, or the like. For each BFD-RS, a channel quality threshold Q_{out_LR} corresponding to the BFD-RS is obtained through calculation based on a preset condition and a preset BLER.

Based on the configuration, the terminal device may measure the BFD-RS. BFD measurement involves two periodicities: evaluation periodicity and reporting periodicity. A BFD measurement procedure is as follows: A measurement result corresponding to a BFD-RS in previous corresponding duration (evaluation periodicity) is used to calculate channel quality at each reporting moment. If channel quality corresponding to each BFD-RS is lower than a channel quality threshold Q_{out_LR} corresponding to the BFD-RS, a physical layer of the terminal device reports a beam failure indication (beam failure indication) to a MAC layer of the terminal device. The reporting periodicity of the BFD measurement is configured for the terminal device. That is, reporting periodicities of all BFD-RSs are the same. The evaluation periodicity of the BFD measurement is separately configured for each BFD-RS. That is, for different BFD-RSs, evaluation periodicities may be different.

### (5) BFR measurement

Beam failure recovery (Beam Failure Recovery, BFR) is a procedure in which beam failure detection and a candidate new beam are reported to a network device when a beam failure occurs in a cell of the terminal device in an RRC_CONNECTED state, to reestablish a beam connection. A BFR reference signal (BFR reference signal, BFR-RS) may be obtained by higher layer configuration. The configured BFR-RS may be an SSB or a periodic CSI-RS. The BFR-RS is configured on a per-cell basis. For SPCells (including a PCell and a PSCell) and an SCell, the BFR-RS may be separately configured by using different RRC signaling. For an SCell without an SSB, the BFR-RS can only be configured as a CSI-RS.

Currently, a time sequence of the BFR-RS measurement process is not specified in the current protocol. In embodiments of this application, a configured BFR-RS may be measured during the BFD measurement, and a beam that satisfies a requirement is selected in advance, or the BFR-RS may be measured after a beam failure occurs.

A channel quality threshold used in the BFR procedure may be determined by a field rsrp-ThresholdSSB of an SPCell RRC signaling and a field rsrp-ThresholdBFR of the SCell RRC signaling. Based on a field configuration and a preset transmission parameter, the terminal device may determine respective channel quality thresholds Qᵢₙ for an SPCell and an SCell, and the channel quality thresholds Qᵢₙ may be L1-RSRP. During BFR measurement, a measurement result of a configured BFR-RS in a corresponding evaluation periodicity is evaluated. If a measurement result of the BFR-RS is higher than a channel quality threshold Qᵢₙ, the terminal device may report, to the network device by using a BFR procedure, an index (index) corresponding to the BFR-RS.

### (6) RLM measurement relaxation (RLM relaxation) and BFD measurement relaxation (BFD relaxation)

For RLM measurement, when a connected discontinuous reception (connected discontinuous reception, C-DRX) cycle is less than or equal to 80 ms, when a measurement result in a time period satisfies a specific condition (for example, the terminal device satisfies a low mobility criterion and/or a high channel quality criterion), the RLM measurement may be relaxed. That is, an out-of-sync evaluation periodicity corresponding to an RLM-RS is extended (or lengthened). Correspondingly, the terminal device may reduce measurement in an out-of-sync state of the RLM-RS in the extended out-of-sync evaluation periodicity.

For BFD measurement, when a C-DRX cycle is less than or equal to 80 ms, when a measurement result in a time period satisfies a specific condition (for example, the terminal device satisfies a low mobility criterion and/or a high channel quality criterion), the BFD measurement may be relaxed. That is, an out-of-sync evaluation periodicity corresponding to a BFD-RS is extended (or lengthened). Correspondingly, the terminal device may reduce measurement in an out-of-sync state of the BFD-RS in the extended out-of-sync evaluation periodicity.

Optionally, whether the terminal device satisfies the low mobility criterion may be determined in the following manner: In a defined time period T_{SearchDeltaP-Connected}, if an L3-RSRP measurement result SS-RSRP of an SSB of a PCell or a PSCell satisfies the following condition, it is considered that the terminal device satisfies the low mobility criterion: (SS-RSRP_{Ref}-SS-RSRP)<S_{SearchDeltaP-Connected}. SS-RSRP_{Ref} is a reference value of L3-RSRP, and is determined by the terminal device. S_{SearchDeltaP-Connected} is an offset value, and is configured by a network device.

Optionally, whether the terminal device satisfies the high channel quality criterion may be determined in the following manner: When an RLM measurement result of an RLM-RS of a PCell or a PSCell is greater than Qᵢₙ+X, it is considered that the terminal device satisfies the high channel quality criterion. Qᵢₙ is a synchronization evaluation threshold corresponding to the RLM-RS, and X is an offset configured by the network device.

### (7) Cell discontinuous transmission/discontinuous reception (cell DTX/DRX)

To implement energy saving, in a possible manner, a cycle including active time (active time) and inactive time (inactive time) is configured for a cell of a terminal device, to implement energy saving. In the inactive time in the cycle, the terminal device does not receive/send some signals. In the active time in the cycle, the terminal device may receive/send the foregoing signals/channels. In this application, the foregoing energy-saving technology is referred to as cell DTX/DRX. Optionally, the cell DTX/DRX takes effect on all terminal devices in a first cell, or a network device indicates the cell DTX/DRX to all users in the first cell by using first indication information, or cell DTX/DRX configurations of all users in the first cell are the same.

The cell DTX/DRX may be configured on a per-cell (cell) basis. The network device may send a plurality of cell DTX/DRX configurations to the terminal device by using RRC signaling, and enable (or activate) one of the plurality of cell DTX/DRX configurations in one cell by using downlink control information (downlink control information, DCI) or a MAC control element (control element, CE).

It should be noted that, in this application, cell DTX/DRX is a short name of the foregoing energy-saving technology. For example, the foregoing energy-saving technology may also be referred to as an energy-saving mode 1, an energy-saving configuration 1, and the like. A name of the energy saving technology is not limited in this application.

The cell DTX/DRX configuration may include one or more of the following information: a cycle length, on time, off time, on duration, off duration, or the like. The on time is a start moment of an activity time period in a cell DTX/DRX cycle, the off time is a start moment of an inactivity time period in a cell DTX/DRX cycle, the on duration is a duration length of the activity time period, and the off duration is a duration length of the inactivity time period.

For example, FIG. 3 shows active time and inactive time in the cell DTX/DRX cycle. The terminal device does not send/receive these signals/channels in the inactive time, to reduce power consumption. As shown in FIG. 3, in the cell DTX/DRX cycle, the active time (also referred to as an active period) and the inactive time (also referred to as an inactive period) are included in a time sequence. In embodiments of this application, the inactive time in the cell DTX/DRX cycle is referred to as a first time period, and the active time in the C-DRX cycle is referred to as a second time period.

A channel/signal transmitted during the active time in the cell DTX/DRX cycle may be a downlink channel, or include a downlink channel and an uplink channel.

For example, the uplink channel may include at least one of the following channels: a CG PUSCH, a HARQ-ACK of an SPS PDSCH, an SR, a PRACH, a random access message A, and a random access message 3.

For example, the downlink channel may include at least one of the following channels:
a PDCCH scrambled by an MCS-C-RNT, a PDCCH scrambled by a PS-RNTI, a PDCCH scrambled by an SI-RNTI, a PDCCH scrambled by an RA-RNTI, a PDCCH scrambled by a TC-RNTI, a PDCCH scrambled by a P-RNTI, a PDCCH scrambled by a PEI-RNTI, an SSB, system information, a paging message, a random access message 2, a random access message 4, a random access message B, BFR, or an SPS PDSCH.

### (8) Connected discontinuous reception (connected discontinuous reception, C-DRX)

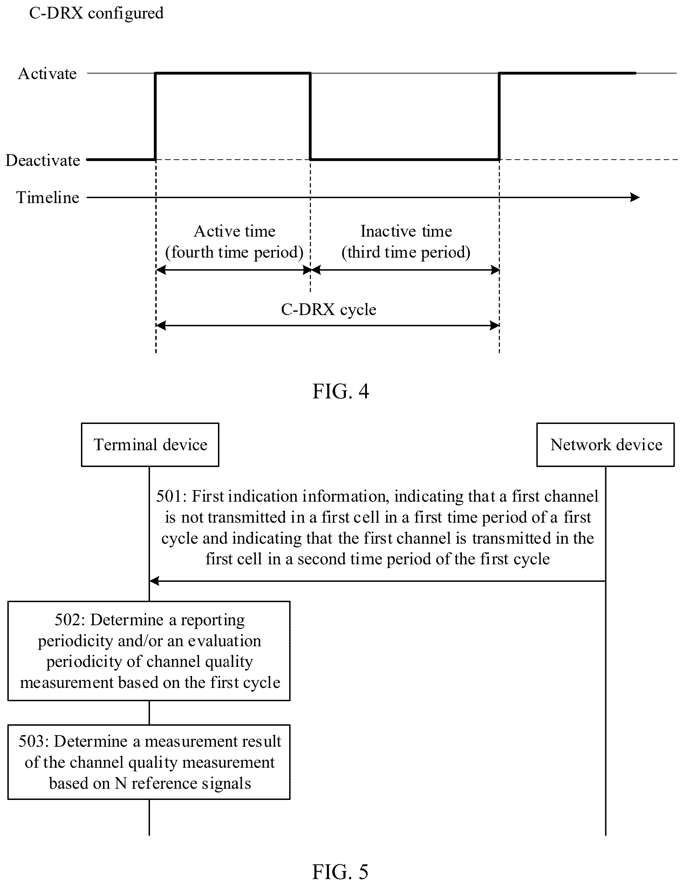

The C-DRX is an energy saving technology for a terminal device in an RRC_CONNECTED state. A cycle including active time and inactive time is configured for the terminal device. In an inactive time period in the cycle, the terminal device does not receive/send some signals/channels, and in an active time period in the cycle, the terminal device may receive/send the foregoing signals/channels. The C-DRX may be enabled on a per-cell group (cell group) basis. That is, for a group of cells (cell) on a terminal device side, configured C-DRX cycles are completely the same. The C-DRX may be configured (or enabled) based on RRC signaling. For example, FIG. 4 shows active time and inactive time in the C-DRX cycle. The terminal device does not send/receive these signals/channels in the inactive time, to reduce power consumption. As shown in FIG. 4, in the C-DRX cycle, the active time (also referred to as an active period) and the inactive time (also referred to as an inactive period) are included in a time sequence. In embodiments of this application, the inactive time in the C-DRX cycle is referred to as a third time period, and the active time in the C-DRX cycle is referred to as a fourth time period.

In embodiments of this application, a signal/channel transmitted in the active time period in the C-DRX cycle may include one or more of the following:
a PDCCH scrambled by a cell RNTI (cell RNTI), a PDCCH scrambled by a configured scheduling RNTI (configured scheduling RNTI, CS-RNTI), a PDCCH scrambled by an interruption RNTI (interruption RNTI, INT-RNTI), a PDCCH scrambled by a cancellation indication RNTI (cancellation indication RNTI, CI-RNTI), a PDCCH scrambled by a slot format indication RNTI (slot format indication RNTI, SFI-RNTI), a PDCCH scrambled by a transmit power control-PUCCH RNTI (Transmit Power Control-PUCCH RNTI, TPC-PUCCH-RNTI), a PDCCH scrambled by a transmit power control-PUSCH radio network temporary identifier (Transmit Power Control-PUSCH RNTI, TPC-PUSCH-RNTI), a PDCCH scrambled by transmit power control-SRS RNTI (Transmit Power Control-SRS RNTI, TPC-SRS-RNTI), a PDCCH scrambled by soft resource availability indication RNTI (Availability indication radio network temporary identifier, AI-RNTI), a dynamically scheduled PDSCH, dynamic grant (dynamic Grant, DG) physical uplink shared channel (physical uplink shared channel, PUSCH), a HARQ-ACK for a dynamically scheduled PDSCH, an A-SRS (aperiodic SRS, aperiodic SRS, where SRS is short for sounding reference signal, that is, a channel sounding reference signal), a P-SRS (periodic SRS, periodic SRS), an SP-SRS (semi-persistent SRS, semi-persistent SRS), A-CSI (aperiodic CSI, aperiodic CSI, where CSI is short for channel state information, that is, channel state information), P-CSI (periodic CSI, periodic CSI), and SP-CSI (semi-persistent CSI, semi-persistent CSI).

In this application, cell DTX/DRX and C-DRX are two different energy-saving modes. In possible understanding, the terminal device does not send or receive a first channel in inactive time of cell DTX/DRX, and the terminal device does not send or receive a second channel in inactive time of C-DRX. The first channel and the second channel are not completely the same. In another possible understanding manner, the cell DTX/DRX is an enhancement or a supplement to the C-DRX in a current communications protocol.

Embodiments of this application provide a channel quality measurement method and an apparatus in an energy-saving mode. To make the objectives, technical solutions, and advantages of this application clearer, the following further describes this application in detail with reference to the accompanying drawings. A specific operation method in a method embodiment may also be applied to an apparatus embodiment or a system embodiment.

Based on the network system architecture shown in FIG. 1 and content described in the foregoing related technologies, FIG. 5 is an example of a possible schematic flowchart of a channel quality measurement method according to an embodiment of this application. The solution in FIG. 5 is described by using an example in which a network apparatus and a terminal apparatus interact with each other. Specifically, the procedure is described by using an example in which the network apparatus is a network device and the terminal apparatus is a terminal. For related descriptions of the network apparatus and the terminal apparatus, refer to the foregoing content. Details are not described again.

As shown in FIG. 5, the method includes the following steps.

Step 501: The network device sends first indication information to the terminal device, where the first indication information indicates that a first channel is not transmitted in a first cell in a first time period of a first cycle and indicates that the first channel is transmitted in the first cell in a second time period of the first cycle.

In a possible implementation, the network device configures cell DTX/DRX in the first cell by using the first indication information, and the network device and the terminal device do not transmit the first channel in the first time period of the first cycle, so that power consumption can be reduced. Correspondingly, the first cycle is a cell DTX/DRX cycle, the first time period is inactive time in the cell DTX/DRX cycle, and the second time period is active time in the cell DTX/DRX cycle. An example of the cell DTX/DRX cycle may be shown in FIG. 3.

In a possible implementation, the first channel may be a downlink channel, or may include a downlink channel and an uplink channel. For a specific example of the first channel, refer to a channel/signal transmitted in the active time in the cell DTX/DRX cycle described above.

Optionally, the first cell may be a primary cell (PCell), a primary secondary cell (PSCell), or a secondary cell (SCell). In a possible implementation, the first cell may be one cell, or may be a plurality of cells. In other words, the first indication information may enable one cell DTX/DRX configuration in one cell, or may enable one cell DTX/DRX configuration in each of a plurality of cells.

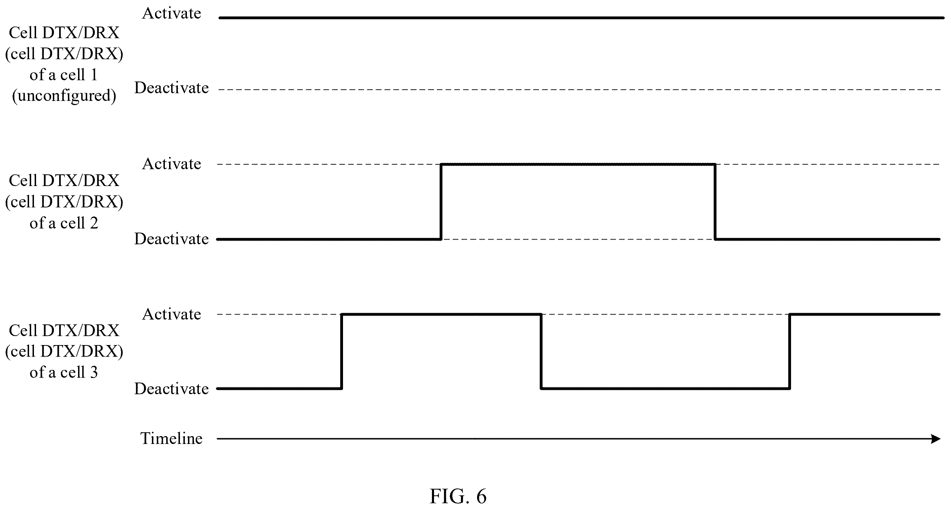

When one cell DTX/DRX configuration is enabled in the plurality of cells by using the first indication information, the first indication information may enable one cell DTX/DRX configuration for each cell independently, and cell DTX/DRX configurations enabled for different cells may be the same or may be different (for example, with different cycle lengths, or different start time). FIG. 6 is an example of a diagram of enabling different cell DTX/DRX configurations in different cells by using the first indication information. As shown in the figure, by using the first indication information, cell DTX/DRX may not be enabled for a cell 1, a cell DTX/DRX configuration 2 is enabled for a cell 2, and a cell DTX/DRX configuration 3 is enabled for a cell 3. The cell DTX/DRX configuration 2 and the cell DTX/DRX configuration 3 have different cycle lengths and different start time. Compared with enabling a cell DTX/DRX configuration for each cell by using indication information, enabling a cell DTX/DRX configuration for a plurality of cells by using the first indication information can reduce transmission bits and reduce signaling overheads.

Optionally, for a cell, when a cell DTX/DRX configuration of the cell is enabled by using the first indication information, if a cell DTX/DRX configuration has been enabled for the cell before, the cell DTX/DRX configuration that exists before may be deactivated based on the first indication information.

In a possible implementation, the first indication information may be unicast, multicast, or broadcast RRC signaling. Optionally, the RRC signaling may indicate at least one of the first cycle, first starting time, first closing time, starting duration, or closing duration. The first starting time is a start moment of the second time period in the first cycle, the first closing time is a start moment of the first time period in the first cycle, the starting duration is duration of the second time period, and the closing duration is duration of the first time period. The cell DTX/DRX is used as an example. In this implementation, the cell DTX/DRX configuration may be configured and enabled based on RRC signaling. The implementation is direct and simple.

In another possible implementation, the first indication information may be a unicast, multicast, or broadcast MAC CE, or may be unicast, multicast, or broadcast DCI. Optionally, the MAC CE or the DCI indicates that the first time period and the second time period in the first cycle are effective. Optionally, before sending the first indication information to the terminal device, the network device further sends first configuration information to the terminal device. The first configuration information includes one or more discontinuous transmission configurations (for example, a cell DTX/DRX configuration). In other words, the network device may first configure the one or more discontinuous transmission configurations for the terminal device by using the first configuration information, and then enable (or activate) one discontinuous transmission configuration in the first cell by using a MAC CE or DCI. The network device may activate or deactivate, in the first cell by using the MAC CE or the DCI in different load cases, a discontinuous transmission configuration that adapts to a current load, so that communication efficiency can be improved.

Optionally, when the first indication information is DCI, the DCI may be scrambled by a first RNTI. The first RNTI is of an RNTI type newly defined in this embodiment of this application, and a PDCCH scrambled by the first RNTI is not of a channel type of the first channel. For example, the network device sends the first indication information by using the PDCCH scrambled by the first RNTI, and the PDCCH scrambled by the first RNTI is not of the type of the first channel, so that the network device can transmit the DCI in the first time period of the first cycle. That is, the network device may indicate, at any moment, the terminal device to activate or deactivate a discontinuous transmission configuration of the first cell. Optionally, the first RNTI may be specific to a terminal device (UE-specific), specific to a terminal device group (UE-group), or specific to a cell (common cell-specific).

When the first indication information is DCI, and the DCI is carried on the PDCCH scrambled by the first RNTI, in a possible implementation, the first indication information is associated with a first search space set. The first search space set is one or more of the following search space sets: Type0-PDCCH CSS set, Type0A-PDCCH CSS set, Type0B-PDCCH CSS set, Type1-PDCCH CSS set, Type1A-PDCCH CSS set, Type2-PDCCH CSS set, Type2A-PDCCH CSS set, Type3-PDCCH CSS set, USS set. In this implementation, the first indication information may use an existing search space set in an existing protocol, and a new search space set does not need to be additionally defined for the first indication information. This reduces complexity of blind detection performed by the terminal device on a PDCCH.

Optionally, when the first indication information is the DCI, the DCI may be scrambled by a second RNTI. The second RNTI is an existing RNTI, for example, a PDCCH scrambled by one of a C-RNTI, a CS-RNTI, an MCS-C-RNTI, an SP-CSI-RNTI, a PS-RNTI, a P-RNTI, and a PEI-RNTI. The first indication information includes a first indication field, and the first indication field is an identifier of the first indication information. For example, the network device sends the first indication information in an existing DCI format, and sets an existing indication field in the first indication information to all 0s or all 1s, to distinguish between an original indication function of the indication field and a new function in this embodiment of this application. For example, the first indication field is set to all 0s, to indicate that a cell DTX/DRX configuration is to be activated. The first indication information is sent in the existing DCI format, so that cyclic redundancy check (cyclic redundancy check, CRC) verification complexity can be reduced.

Optionally, when the first indication information is DCI, the DCI may be DCI formed after one or more fields are added to an existing DCI format. The one or more added fields are used to activate or deactivate a first discontinuous transmission configuration (that is, a cell DTX/DRX configuration), that is, indicate not to transmit the first channel in the first cell in the first time period. Therefore, when the first discontinuous transmission configuration is configured, an additional quantity of blind detection times may not be increased, and an original function of the existing DCI format is not affected.

Step 502: The terminal device determines a reporting periodicity and/or an evaluation periodicity of channel quality measurement based on the first cycle.

In this embodiment of this application, the reporting periodicity of the channel quality measurement is related to the first cycle, or an evaluation periodicity of one or more reference signals used for the channel quality measurement is related to the first cycle.

In this embodiment of this application, the channel quality measurement may be RLM measurement, BFD measurement, or BFR measurement. This is not limited in this embodiment of this application. The following uses the RLM measurement, the BFD measurement, and the BFR measurement as examples to describe reporting periodicities and evaluation periodicities of the three types of measurement.

### (I) RLM measurement

### (1) Reporting periodicity of the RLM measurement

When the first cycle is less than or equal to a first threshold, the reporting periodicity of the RLM measurement is one of the following:
max(K⁽¹⁾_{RLM_report}×first reference signal periodicity, K⁽²⁾_{RLM_report}×first cycle, first duration);
max(K⁽¹⁾_{RLM_report}×first reference signal periodicity, K⁽²⁾_{RLM_report}×first cycle);
max(K⁽²⁾_{RLM_report}×first cycle, first duration); and
the first cycle.

When the first cycle is greater than the first threshold, the reporting periodicity of the RLM measurement is:
K⁽³⁾_{RLM_report}×first cycle.

If the first cell is a primary secondary cell (PSCell) and is in a deactivated state, the reporting periodicity of the RLM measurement includes the following cases:

When the first cycle is less than or equal to the first threshold, the reporting periodicity of the RLM measurement is one of the following:
max(K⁽¹⁾_{RLM_report}×first configuration periodicity, K⁽²⁾_{RLM_report}×first cycle, first duration);
max(K⁽¹⁾_{RLM_report}×first configuration periodicity, K⁽²⁾_{RLM_report}×first cycle);
max(K⁽²⁾_{RLM_report}×first cycle, first duration); and
the first cycle.

When the first cycle is greater than the first threshold, the reporting periodicity of the RLM measurement is:
K⁽³⁾_{RLM_report}×first cycle.

Max(parameter 1, parameter 2, ..., parameter n) represents a maximum value in the parameter 1, the parameter 2, ..., and the parameter n, where n is a positive integer.

K⁽¹⁾_{RLM_report}, K⁽²⁾_{RLM_report}, and K⁽³⁾_{RLM_report} are all coefficients with positive values. It may be understood that K⁽¹⁾_{RLM_report}, K⁽²⁾_{RLM_report}, or K⁽³⁾_{RLM_report} may be one value, or may be obtained through calculation by using a plurality of values. The plurality of values may be predefined, configured by the network device, or determined by the terminal device. Optionally, K⁽¹⁾_{RLM_report} and K⁽²⁾_{RLM_report} are both equal to 1.5, and K⁽³⁾_{RLM_report} is equal to 1. Optionally, the first duration is 10 milliseconds.

Optionally, at least one of K⁽¹⁾_{RLM_report}, K⁽²⁾_{RLM_report}, K⁽³⁾_{RLM_report}, the first duration, and the first threshold may be predefined, configured by the network device, or determined by the terminal device.

The first reference signal periodicity is a periodicity of one of N reference signals (RLM-RSs) used for the RLM measurement. Optionally, the reference signal may be a reference signal with a minimum periodicity in the N reference signals.

Optionally, the first configuration periodicity is predefined, or is configured by the network device.

The first threshold may enable a length of the reporting periodicity to satisfy a specific requirement. For example, even if a configured cell DTX/DRX cycle is small, the reporting periodicity also needs to satisfy a length requirement (for example, at least greater than or equal to periodicities of several reference signals). In this way, there can be a new measurement result of a related reference signal or measurement results of a sufficient quantity of related reference signals in each reporting interval. Optionally, the first threshold is 160 milliseconds.

For example, cell DTX/DRX is enabled by using the first indication information. When a cell DTX/DRX cycle is small (for example, less than or equal to the first threshold), the reporting periodicity of the RLM measurement may be a maximum value selected from (K⁽¹⁾_{RLM_report}×first reference signal periodicity, K⁽²⁾_{RLM_report}×first cycle, first duration), so that the reporting periodicity of the RLM measurement is as long as possible, and more new measurement results can be included during reporting. In this way, an actual channel state can be better reflected. When the cell DTX/DRX cycle is large (for example, greater than the first threshold), the reporting periodicity of the RLM measurement may be the same as the cell DTX/DRX cycle, and a step of determining the reporting periodicity can be simplified.

### (2) In-sync evaluation periodicity of the RLM measurement

The following describes an in-sync evaluation periodicity of a first reference signal by using an example in which N reference signals (RLM-RSs) include the first reference signal.

When the first cycle is less than or equal to a second threshold, the in-sync evaluation periodicity of the first reference signal is one of the following:
max(K⁽¹⁾_{RLM_eva_in}×max(periodicity of the first reference signal, first cycle), second duration); and
max(K⁽¹⁾_{RLM_eva_in}×max(periodicity of the first reference signal, first cycle)).

When the first cycle is greater than the second threshold, the in-sync evaluation periodicity of the first reference signal is:
K⁽²⁾_{RLM_eva_in}×first cycle.

If the first cell is a primary secondary cell (PSCell) and is in a deactivated state, the in-sync evaluation periodicity of the first reference signal includes the following cases:

When the first cycle is less than or equal to the second threshold, the in-sync evaluation periodicity of the first reference signal is one of the following:
max(K⁽¹⁾_{RLM_eva_in}×first configuration periodicity, K⁽²⁾_{RLM_eva_in}×first cycle); and
K⁽¹⁾_{RLM_eva_in}×max(first configuration periodicity, first cycle).

When the first cycle is greater than the second threshold, the in-sync evaluation periodicity of the first reference signal is one of the following:
max(K⁽³⁾_{RLM_eva in}×first configuration periodicity, K⁽⁴⁾_{RLM_eva_in}×first cycle); and
K⁽³⁾_{RLM_eva_in}×max(first configuration periodicity, first cycle).

K⁽¹⁾_{RLM_eva_in}, K⁽²⁾_{RLM_eva_in}, K⁽³⁾_{RLM_eva_in}, and K⁽⁴⁾_{RLM_eva_in} are all coefficients with positive values. It may be understood that K⁽¹⁾_{RLM_eva_in}, K⁽²⁾_{RLMeva_in}, K⁽³⁾_{RLM_eva_in}, or K⁽⁴⁾_{RLM_eva_in} may be one value, or may be obtained through calculation by using a plurality of values. The plurality of values may be predefined, configured by the network device, or determined by the terminal device.

Optionally, at least one of K⁽¹⁾_{RLM_eva_in}, K⁽²⁾_{RLM_eva_in}, K⁽³⁾_{RLM_eva_in}, K⁽⁴⁾_{RLM_eva_in}, the second duration, and the second threshold may be predefined, configured by the network device, or determined by the terminal device.

Optionally, when an RLM-RS is an SSB or a CSI-RS, K⁽¹⁾_{RLM_eva_in} and K⁽³⁾_{RLM_eva_in} corresponding to the RLM-RS are different.

Optionally, the first threshold is equal to the second threshold. For example, the first threshold and the second threshold are both 160 milliseconds.

The second threshold may enable a length of the evaluation periodicity to satisfy a specific requirement. For example, even if the configured cell DTX/DRX cycle is small, the evaluation periodicity also needs to satisfy a length requirement (for example, at least greater than or equal to periodicities of several reference signals). In this way, there can be a new measurement result of a related reference signal or a sufficient quantity of measurement results of a related reference signal in each evaluation time period.

For example, cell DTX/DRX is enabled by using the first indication information. When the cell DTX/DRX cycle is small (for example, less than or equal to the first threshold), the in-sync evaluation periodicity of the RLM measurement may be a maximum value selected from (K⁽¹⁾_{RLM_eva_in}×max(periodicity of the first reference signal, first cycle), second duration), so that the in-sync evaluation periodicity of the RLM measurement is as long as possible, more new measurement results can be obtained, and an actual channel state can be better reflected.

### (3) Out-of-sync evaluation periodicity of the RLM measurement

The following describes an out-of-sync evaluation periodicity of a first reference signal by using an example in which N reference signals (RLM-RSs) include the first reference signal.

When the first cycle is less than or equal to the second threshold, the out-of-sync evaluation periodicity of the first reference signal is one of the following:
max(K⁽¹⁾_{RLM_eva_out}×max(periodicity of the first reference signal, first cycle), third duration); and
max(K⁽¹⁾_{RLM_eva_out}×max(periodicity of the first reference signal, first cycle)).

When the first cycle is greater than the second threshold, the out-of-sync evaluation periodicity of the first reference signal is:
K⁽²⁾_{RLM_eva_out}×first cycle.

If the first cell is a primary secondary cell (PSCell) and is in a deactivated state, the out-of-sync evaluation periodicity of the first reference signal includes the following cases:
When the first cycle is less than or equal to the second threshold, the out-of-sync evaluation periodicity of the first reference signal is one of the following:
max(K⁽¹⁾_{RLM_eva_out}×first configuration periodicity, K⁽²⁾_{RLM_eva_out}×first cycle); and
K⁽¹⁾_{RLM_eva_out}×max(first configuration periodicity, first cycle).

When the first cycle is greater than the second threshold, the out-of-sync evaluation periodicity of the first reference signal is one of the following:
(K⁽³⁾_{RLM_eva out}×first configuration periodicity, K⁽⁴⁾_{RLM_eva_out}×first cycle); and
K⁽³⁾_{RLM_eva_out}×max(first configuration periodicity, first cycle).

K⁽¹⁾_{RLM_eva_out}, K⁽²⁾_{RLM_eva_outt}, K⁽³⁾_{RLM_eva_out}, and K⁽⁴⁾_{RLM_eva_out} are all coefficients with positive values. It may be understood that K⁽¹⁾_{RLM_eva_out}, K⁽²⁾_{RLM_eva} out, K⁽³⁾_{RLM_eva_out}, or K⁽⁴⁾_{RLM_eva_out} may be one value, or may be obtained through calculation by using a plurality of values. The plurality of values may be predefined, configured by the network device, or determined by the terminal device.

Optionally, at least one of K⁽¹⁾_{RLM_eva_out}, K⁽²⁾_{RLM_eva_out}, K⁽³⁾_{RLM_eva_out}, K⁽⁴⁾_{RLM_eva_out}, the third duration, and the second threshold may be predefined, configured by the network device, or determined by the terminal device.

Optionally, the first configuration periodicity is predefined, or is configured by the network device.

Optionally, when an RLM-RS is an SSB or a CSI-RS, K⁽¹⁾_{RLM_eva_out} and K⁽³⁾_{RLM_eva_out} corresponding to the RLM-RS are different.

For example, cell DTX/DRX is enabled by using the first indication information. When a cell DTX/DRX cycle is small (for example, less than or equal to the first threshold), the reporting periodicity of the RLM measurement may be a maximum value selected from (K⁽¹⁾_{RLM_eva_in}×max(periodicity of the first reference signal, first cycle), second duration), so that the out-of-sync evaluation periodicity of the RLM measurement is as long as possible, more new measurement results can be obtained, and an actual channel state can be better reflected.

### (4) RLM measurement relaxation

The following describes an extension of an out-of-sync evaluation periodicity of a first reference signal by using an example in which N reference signals (RLM-RSs) include the first reference signal.

When the N RLM-RSs are N SSBs, for a first SSB in the N SSBs, the method further includes:
If the first cycle is less than or equal to a third threshold, and the first cell satisfies a low mobility criterion and/or a high channel quality criterion, when max(periodicity of the first SSB, first cycle) is less than or equal to the third threshold, an out-of-sync evaluation periodicity of the first SSB is extended to:
max(K⁽¹⁾_{PLM_SSB_relax}×fourth duration, K⁽²⁾_{PLM_SSB_relax}×max(periodicity of the first SSB, first cycle)).

If the first cycle is less than or equal to the third threshold, and the first cell satisfies the low mobility criterion and/or the high channel quality criterion, when max(periodicity of the first SSB, first cycle) is greater than the third threshold and less than a fourth threshold, the out-of-sync evaluation periodicity of the first SSB is extended to:
K⁽³⁾_{PLM_SSB_relax}×max(periodicity of the first SSB, first cycle).

K⁽¹⁾_{PLM_SSB_relax}, K⁽²⁾_{PLM_SSB_relax}, and K⁽³⁾_{PLM_SSB_relax} are all coefficients with positive values. It may be understood that K⁽¹⁾_{PLM_SSB_relax}, K⁽²⁾_{PLM_SSB _relax}, or K⁽³⁾_{PLM_SSB_relax} is one value, or may be obtained through calculation by using a plurality of values. The plurality of values may be predefined, configured by the network device, or determined by the terminal device.

Optionally, at least one of K⁽¹⁾_{PLM_SSB_relax}, K⁽²⁾_{PLM_SSB_relax}, K⁽³⁾_{PLM_SSB_relax}, the fourth duration, the third threshold, and the fourth threshold may be predefined, configured by the network device, or determined by the terminal device. Optionally, the fourth threshold is 80 milliseconds, or the fourth threshold is 160 milliseconds.

When the N RLM-RSs are N CSI-RSs, for a first CSI-RS in the N CSI-RSs, the method further includes:
If the first cycle is less than or equal to the third threshold, and the first cell satisfies the low mobility criterion and/or the high channel quality criterion, when max(periodicity of the first CSI-RS, first cycle) is less than or equal to the third threshold, an out-of-sync evaluation periodicity of the first CSI-RS is extended to:
max(K⁽¹⁾_{PLM_CSI-RS_relax}×fourth duration, K⁽²⁾_{PLM_CSI-RS_relax}×max(periodicity of the first CSI-RS, first cycle)).

K⁽¹⁾_{PLM_CSI-RS_relax} and K⁽²⁾_{PLM_CSI-RS_relax} are both coefficients with positive values. It may be understood that K⁽¹⁾_{PLM_CSI-RS_relax} or K⁽²⁾_{PLM_CSI-RS_relax} is one value, or may be obtained through calculation by using a plurality of values. The plurality of values may be predefined, configured by the network device, or determined by the terminal device.

Optionally, at least one of K⁽¹⁾_{PLM_CSI-RS_relax}, K⁽²⁾_{PLM_CSI-RS_relax}, the fourth duration, the third threshold, and the fourth threshold may be predefined, configured by the network device, or determined by the terminal device. Optionally, the fourth threshold is 80 milliseconds, or the fourth threshold is 160 milliseconds.

Optionally, when the first cycle is greater than the third threshold, the out-of-sync evaluation periodicity is not relaxed. That is, no out-of-sync evaluation periodicity of any RLM-RS is extended.

### (II) BFD measurement

### (1) Reporting periodicity of the BFD measurement

When the first cycle is less than or equal to a first threshold, the reporting periodicity of the BFD measurement is one of the following:
max(K⁽¹⁾_{BFD_report}×first reference signal periodicity, K⁽²⁾_{BFD_report}×first cycle, fifth duration);
max(K⁽¹⁾_{BFD_report}×first reference signal periodicity, K⁽²⁾_{BFD_report}×first cycle);
max(K⁽²⁾_{BFD_report}×first cycle, fifth duration); and
the first cycle.

When the first cycle is greater than the first threshold, the reporting periodicity of the BFD measurement is:
K⁽³⁾_{BFD_report}×first cycle.

When the first cell is a primary secondary cell (PSCell) and is in a deactivated state, the reporting periodicity of the BFD measurement may include the following cases:
When the first cycle is less than or equal to the first threshold, the reporting periodicity of the BFD measurement is one of the following:
max(K⁽¹⁾_{BFD_report}×first configuration periodicity, K⁽²⁾_{BFD_report}×first cycle, fifth duration);
max(K⁽¹⁾_{BFD_report}×first configuration periodicity, K⁽²⁾_{BFD_report}×first cycle);
max(K⁽²⁾_{BFD_report}×first cycle, fifth duration); and
the first cycle.

When the first cycle is greater than the first threshold, the reporting periodicity of the BFD measurement is:
K⁽³⁾_{BFD_report}×first cycle.

K⁽¹⁾_{BFD_report}, K⁽²⁾_{BFD_report}, and K⁽³⁾_{BFD_report} are all coefficients with positive values. It may be understood that K⁽¹⁾_{BFD_report}, K⁽²⁾_{BFD_report}, or K⁽³⁾_{BFD_report} may be one value, or may be obtained through calculation by using a plurality of values. The plurality of values may be predefined, configured by the network device, or determined by the terminal device.

Optionally, at least one of K⁽¹⁾_{BFD_report}, K⁽²⁾_{BFD_report}, K⁽³⁾_{BFD_report}, the fifth duration, and the first threshold may be predefined, configured by the network device, or determined by the terminal device.

The first reference signal periodicity is a periodicity of one of N reference signals (BFD-RSs) used for BFD measurement. Optionally, the reference signal may be a reference signal with a minimum periodicity in the N reference signals.

Optionally, the first configuration periodicity is predefined, or is configured by the network device.

The first threshold may enable a length of the reporting periodicity to satisfy a specific requirement. For example, even if a configured cell DTX/DRX cycle is small, the reporting periodicity also needs to satisfy a length requirement (for example, at least greater than or equal to periodicities of several reference signals). In this way, there can be a new measurement result of a related reference signal or a sufficient quantity of measurement results of a related reference signal in each reporting interval.

For example, cell DTX/DRX is enabled by using the first indication information. When a cell DTX/DRX cycle is small (for example, less than or equal to the first threshold), the reporting periodicity of the BFD measurement may be a maximum value selected from (K⁽¹⁾_{BFD_report}×first reference signal periodicity, K⁽²⁾_{BFD_report}×first cycle, fifth duration), so that the reporting periodicity of the BFD measurement is as long as possible, and more new measurement results can be included during reporting. In this way, an actual channel state can be better reflected. When the cell DTX/DRX cycle is large (for example, greater than the first threshold), the reporting periodicity of the BFD measurement may be the same as the cell DTX/DRX cycle, and a step of determining the reporting periodicity can be simplified.

### (2) BFD evaluation periodicity

The following describes an extension of an out-of-sync evaluation periodicity of a first reference signal by using an example in which N reference signals (BFD-RSs) include the first reference signal.

When the first cycle is less than or equal to a second threshold, the evaluation periodicity of the first reference signal is one of the following:
max(K⁽¹⁾_{BFD_eva}×max(periodicity of the first reference signal, first cycle), sixth duration); and
max(K⁽¹⁾_{BFD_eva}×max(periodicity of the first reference signal, first cycle)).

When the first cycle is greater than the second threshold, the evaluation periodicity of the first reference signal is:
K⁽²⁾_{BFD_eva}×first cycle.

When the first cell is a primary secondary cell (PSCell) and is in a deactivated state, the evaluation periodicity of the first reference signal may include the following cases:
When the first cycle is less than or equal to the second threshold, the evaluation periodicity of the first reference signal is:
K⁽³⁾_{BFD_eva}×max(first configuration periodicity, first cycle).

When the first cycle is greater than the second threshold, the evaluation periodicity of the first reference signal is:
K⁽⁴⁾_{BFD_eva}×max(first configuration periodicity, first cycle).

K⁽¹⁾_{BFD_eva}, K⁽²⁾_{BFD_eva}, K⁽³⁾_{BFD_eva}, and K⁽⁴⁾_{BFD_eva} are all coefficients with positive values. It may be understood that K⁽¹⁾_{BFD_eva}, K⁽²⁾_{BFD_eva}, K⁽³⁾_{BFD_eva}, or K⁽⁴⁾_{BFD_eva} may be one value, or may be obtained through calculation by using a plurality of values. The plurality of values may be predefined, configured by the network device, or determined by the terminal device.

Optionally, at least one of K⁽¹⁾_{BFD_eva}, K⁽²⁾_{BFD_eva}, K⁽³⁾_{BFD_eva}, K⁽⁴⁾_{BFD_eva}, the sixth duration, and the first threshold may be predefined, configured by the network device, or determined by the terminal device.

Optionally, the first configuration periodicity is predefined, or is configured by the network device.

For example, cell DTX/DRX is enabled by using the first indication information. When a cell DTX/DRX cycle is small (for example, less than or equal to the first threshold), the reporting periodicity of the BFD measurement may be a maximum value selected from (K⁽¹⁾_{BFD_eva}×max(periodicity of the first reference signal, first cycle), sixth duration), so that the out-of-sync evaluation periodicity of the BFD measurement is as long as possible, more measurement results can be obtained, and an actual channel state can be better reflected.

### (3) BFD measurement relaxation

The following describes an extension of an evaluation periodicity of a first reference signal by using an example in which N reference signals (BFD-RSs) include the first reference signal.

When the N BFD-RSs are N SSBs, for a first SSB in the N SSBs, the method further includes:
If the first cycle is less than or equal to a third threshold, and the first cell satisfies a low mobility criterion and/or a high channel quality criterion, when max(periodicity of the first SSB, first cycle) is less than or equal to the third threshold, an evaluation periodicity of the first SSB is extended to:
max(K⁽¹⁾_{BFD_SSB_relax}×seventh duration, K⁽²⁾_{BFD_SSB_relax}×max(periodicity of the first SSB, first cycle)).

If the first cycle is less than or equal to the third threshold, and the first cell satisfies the low mobility criterion and/or the high channel quality criterion, when max(periodicity of the first SSB, first cycle) is greater than the third threshold and less than a fourth threshold, the evaluation periodicity of the first SSB is extended to one of the following:
max(K⁽³⁾_{BFD_SSB_relax}×max(periodicity of the first SSB, first cycle), eighth duration); and
max(K⁽³⁾_{BFD_SSB_relax}×max(periodicity of the first SSB, first cycle)).

K⁽¹⁾_{BFD_SSB_relax}, K⁽²⁾_{BFD_SSB_relax}, and K⁽³⁾_{BFD_SSB_relax} are all coefficients with positive values. It may be understood that K⁽¹⁾_{BFD_SSB_relax}, K⁽²⁾_{BFD_SSB_relax}, or K⁽³⁾_{BFD_SSB_relax} is one value, or may be obtained through calculation by using a plurality of values. The plurality of values may be predefined, configured by the network device, or determined by the terminal device.

Optionally, at least one of K⁽¹⁾_{BFD_SSB_relax}, K⁽²⁾_{BFD_SSB_relax}, K⁽³⁾_{BFD_SSB_relax}, the fourth duration, the third threshold, and the fourth threshold may be predefined, configured by the network device, or determined by the terminal device.

When the N BFD-RSs are N CSI-RSs, for a first CSI-RS in the N CSI-RSs, the method further includes:
If the first cycle is less than or equal to the third threshold, and the first cell satisfies the low mobility criterion and/or the high channel quality criterion, when max(periodicity of the first CSI-RS, first cycle) is less than or equal to the third threshold, an evaluation periodicity of the first CSI-RS is extended to:
max(K⁽¹⁾_{BFD_CSI-RS_relax}×seventh duration, K⁽²⁾_{BFD_CSI-RS_relax}×max(periodicity of the first CSI-RS, first cycle)).

K⁽¹⁾_{BFD_CSI-RS_relax} and K⁽²⁾_{BFD_CSI-RS_relax} are both coefficients with positive values. It may be understood that K⁽¹⁾_{BFD_CSI-RS_relax} or K⁽²⁾_{BFD_CSI-RS_relax} is one value, or may be obtained through calculation by using a plurality of values. The plurality of values may be predefined, configured by the network device, or determined by the terminal device.

Optionally, at least one of K⁽¹⁾_{BFD_CSI-RS_relax}, K⁽²⁾_{BFD_CSI-RS_relax}, the seventh duration, and the third threshold may be predefined, configured by the network device, or determined by the terminal device.

Optionally, when the first cycle is greater than the third threshold, the evaluation periodicity of the BFD measurement is not relaxed. That is, no evaluation periodicity of any BFD-RS is extended.

It may be understood that values of the first threshold, the second threshold, and the third threshold in the reporting periodicity and the evaluation periodicity of the BFD measurement may be the same as or different from values of related thresholds in the reporting periodicity and the evaluation periodicity of the RLM measurement.

### (III) BFR measurement

When the first cycle is less than or equal to a second threshold, an evaluation periodicity of a first reference signal is:
max(K⁽¹⁾_{BFR_eva}×periodicity of the first reference signal, eighth duration).

When the first cycle is greater than the second threshold, the evaluation periodicity of the first reference signal is:
K⁽²⁾_{BFR_eva}×first cycle.

K⁽¹⁾_{BFR_eva} and K⁽²⁾_{BFR_eva} are both coefficients with positive values. It may be understood that K⁽¹⁾_{BFR_eva} or K⁽²⁾_{BFR_eva} is one value, or may be obtained through calculation by using a plurality of values. The plurality of values may be predefined, configured by the network device, or determined by the terminal device.

Optionally, at least one of K⁽¹⁾_{BFR_eva}, K⁽²⁾_{BFR_eva}, the second threshold, and the eighth duration may be predefined, configured by the network device, or determined by the terminal device.

It may be understood that a value of the second threshold in the reporting periodicity and the evaluation periodicity of the BFR measurement may be the same as or different from a value of a related threshold in the reporting periodicity and the evaluation periodicity of the RLM measurement.

For example, cell DTX/DRX is enabled by using the first indication information. When a cell DTX/DRX cycle is small (for example, less than or equal to a first threshold), the reporting periodicity of the BFR measurement may be a maximum value selected from (K⁽¹⁾_{BFR_eva}×periodicity of the first reference signal, eighth duration), so that the out-of-sync evaluation periodicity of the BFR measurement is as long as possible, more new measurement results can be obtained, and an actual channel state can be better reflected.

In a possible implementation, when the cell DTX/DRX configuration is disabled and the C-DRX configuration is disabled for the first cell of the terminal device, channel quality measurement may be performed according to a method defined when C-DRX is not configured in an existing protocol. For example, a reporting periodicity of RLM, and an in-sync evaluation periodicity and an out-of-sync evaluation periodicity of each RLM-RS are determined according to the existing protocol.

Step 503: The terminal device determines a measurement result of the channel quality measurement based on the N reference signals, where N is a positive integer. In this step, the terminal device may perform corresponding reporting based on a reporting periodicity of the channel quality measurement according to the measurement result.

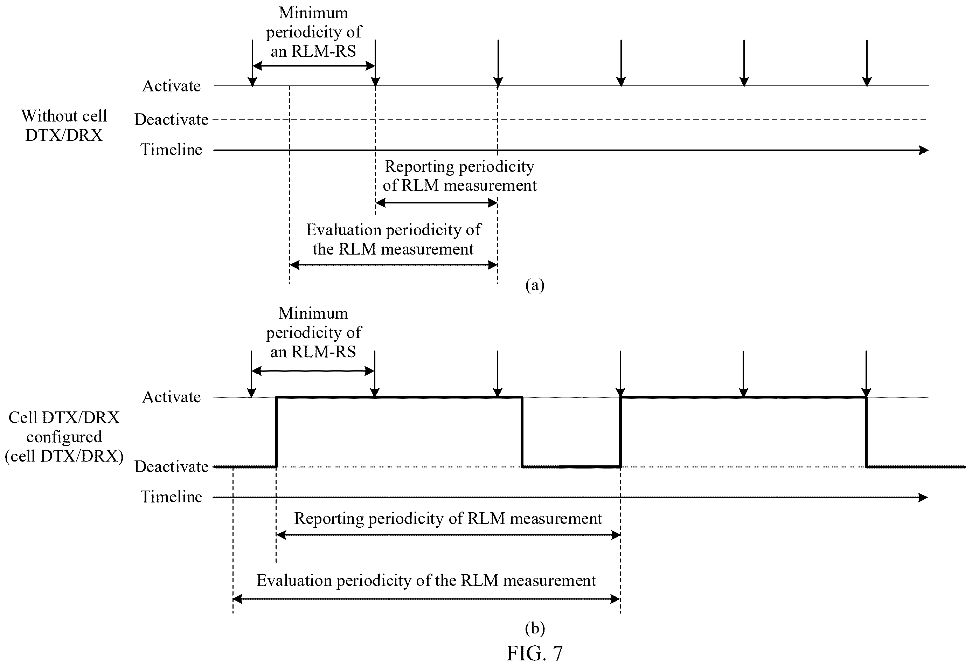

Based on the procedure shown in FIG. 5, when cell DTX/DRX is enabled and C-DRX is disabled, the terminal device may determine, based on a cell DTX/DRX cycle, a reporting periodicity of the channel quality measurement and an evaluation periodicity of a reference signal used for the channel quality measurement, so that reporting can be performed based on a measurement result in the evaluation periodicity when a reporting moment arrives. FIG. 7 is a diagram of an example of a reporting periodicity and an evaluation periodicity of RLM measurement after cell DTX/DRX is enabled for the first cell by using the RLM measurement as an example. As shown in FIG. 7, (a) shows a reporting periodicity and an evaluation periodicity of the RLM measurement when cell DTX/DRX is disabled for the first cell, and (b) shows a reporting periodicity and an evaluation periodicity of the RLM measurement when C-DRX and cell DTX/DRX are enabled for the first cell.

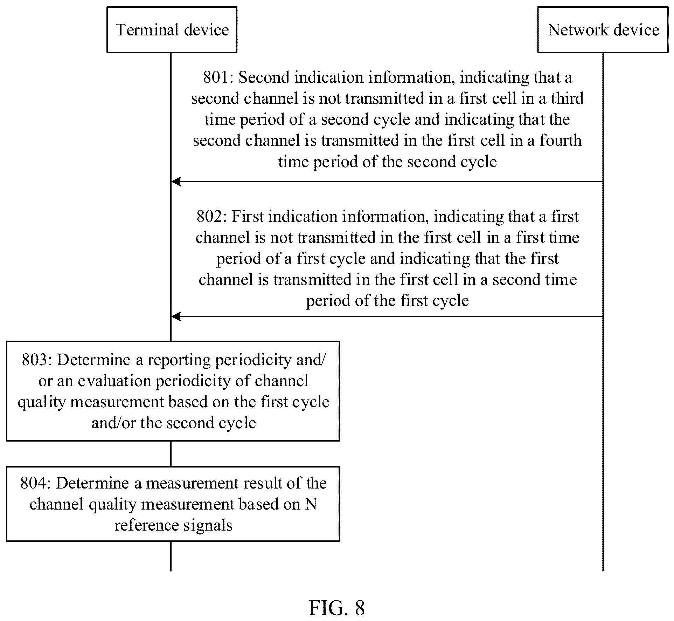

Based on the network system architecture shown in FIG. 1 and content described in the foregoing related technologies, FIG. 8 is an example of a possible schematic flowchart of a channel quality measurement method according to an embodiment of this application. The solution in FIG. 8 is described by using an example in which a network apparatus and a terminal apparatus interact with each other. Specifically, the procedure is described by using an example in which the network apparatus is a network device and the terminal apparatus is a terminal. For related descriptions of the network apparatus and the terminal apparatus, refer to the foregoing content. Details are not described again.

As shown in FIG. 8, the method includes the following steps.

Step 801: The network device sends second indication information to the terminal device. The second indication information indicates that a second channel is not transmitted in a first cell in a third time period of a second cycle and indicates that the second channel is transmitted in the first cell in a fourth time period of the second cycle.

In a possible implementation, the network device enables (or referred to as activates) a C-DRX configuration in a group of cells by using the second indication information, so that the network device and the terminal device may not transmit the second channel in the group of cells in the third time period of the second cycle, to reduce power consumption. Correspondingly, the second cycle is a C-DRX cycle, the third time period is inactive time in the C-DRX cycle, and the fourth time period is active time in the C-DRX cycle. An example of the C-DRX cycle may be shown in FIG. 4.

Step 802: The network device sends first indication information to the terminal device. The first indication information indicates that a first channel is not transmitted in the first cell in a first time period of a first cycle and indicates that the first channel is transmitted in the first cell in a second time period of the first cycle.

For related descriptions of the first indication information and the first cycle, refer to related content in the procedure shown in FIG. 5. Details are not described herein again.

In a possible implementation, when the first indication information is DCI and a first RNTI is used, when the terminal device also receives the second indication information, a PDCCH scrambled by the first RNTI is not of a type of the first channel or a type of the second channel. That is, the first indication information may be transmitted in the first time period and/or the third time period, so that when cell DTX/DRX and C-DRX are configured in the first cell, the network device may indicate, at any moment, the terminal device to activate/deactivate a cell DTX/DRX configuration.

Step 803: The terminal device determines a reporting periodicity and/or an evaluation periodicity of channel quality measurement based on the first cycle and/or the second cycle.

In this embodiment of this application, an example in which the first cycle is a cell DTX/DRX cycle and the second cycle is a C-DRX cycle is used. When both cell DTX/DRX and the C-DRX are configured for the terminal device, understanding of active time by the terminal device and the network device may be one of the following cases:
First understanding: The terminal device and the network device consider active time of cell DTX/DRX as active time of the terminal device and the network device. That is, configuration of C-DRX does not affect the active time considered by the terminal device and the network device.

Second understanding: The terminal device and the network device consider active time of C-DRX as active time of the terminal device and the network device. That is, configuration of cell DTX/DRX does not affect the active time considered by the terminal device and the network device.

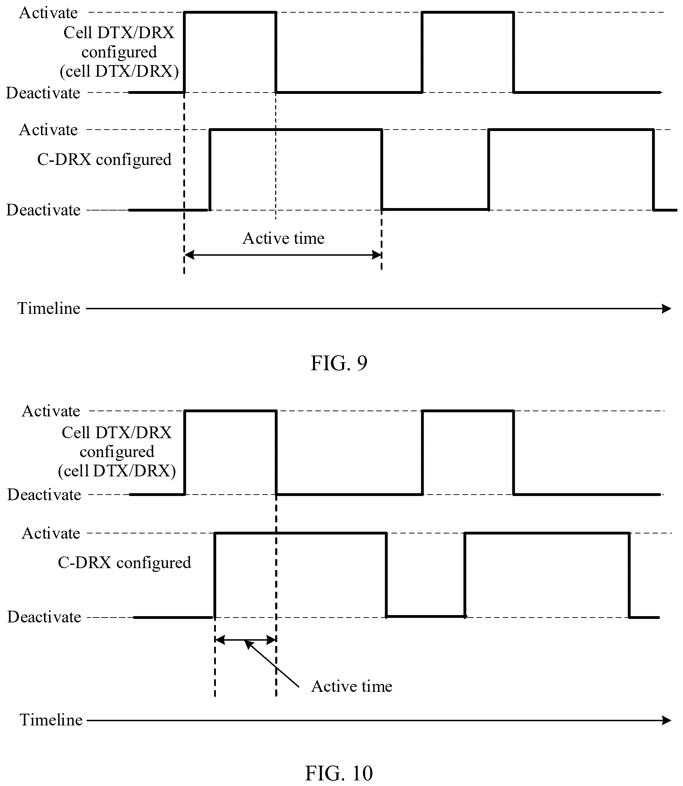

Third understanding: The terminal device and the network device consider a union of active time of cell DTX/DRX and active time of C-DRX as active time of the terminal device and the network device, that is, consider that the terminal device and the network device can transmit the first channel and/or the second channel in either the second time period or the fourth time period. For example, FIG. 9 is a diagram of active time determined by the terminal device and the network device when the active time of cell DTX/DRX overlaps the active time of C-DRX. As shown in FIG. 9, the terminal device and the network device determine both the active time of cell DTX/DRX and the active time of C-DRX as the active time.

Fourth understanding: The terminal device and the network device consider an intersection of active time of cell DTX/DRX and active time of C-DRX as active time of the terminal device and the network device, that is, consider that the terminal device and the network device transmit the first channel and/or the second channel only when the second time period and the fourth time period are ongoing simultaneously. For example, FIG. 10 is a diagram of the active time determined by the terminal device and the network device when the active time of cell DTX/DRX overlaps the active time of C-DRX. As shown in FIG. 9, the terminal device and the network device determine an intersection of the active time of cell DTX/DRX and the active time of C-DRX as the active time.

In this embodiment of this application, the reporting periodicity of the channel quality measurement is related to the first cycle, or is related to the second cycle, or is related to the first cycle and the second cycle. An evaluation periodicity of one or more reference signals used for the channel quality measurement is related to the first cycle, or related to the second cycle, or related to the first cycle and the second cycle.

For ease of description, a first parameter and a second parameter that are related to the first cycle and/or the second cycle are defined in this embodiment of this application. Correspondingly, in this embodiment of this application, the reporting periodicity of the channel quality measurement is related to the first parameter. That is, the reporting periodicity of the channel quality measurement may be determined based on the first parameter. The evaluation periodicity of the channel quality measurement is related to the second parameter. That is, the evaluation periodicity of the channel quality measurement may be determined based on the second parameter.

The first parameter is one of the following:
The first parameter is the first cycle, and this may be applicable to a case in which the terminal device and the network device determine the active time in the first understanding, or determine the active time in the third understanding, or determine the active time in the fourth understanding.

The first parameter is the second cycle, and this may be applicable to a case in which the terminal device and the network device determine the active time in the second understanding, or determine the active time in the third understanding, or determine the active time in the fourth understanding.

The first parameter is min(Q1×first cycle, Q2×second cycle), and this may be applicable to a case in which the terminal device and the network device determine the active time in the third understanding. The reporting periodicity of the channel quality measurement is determined based on the first parameter, so that the reporting periodicity of the channel quality measurement can be shortened, and out-of-sync can be found as soon as possible.

The first parameter is max(Q1×first cycle, Q2×second cycle), and this may be applicable to a case in which the terminal device and the network device determine the active time in the fourth understanding.

The first parameter is LCM(Q1×first cycle, Q2×second cycle), and this may be applicable to a case in which the terminal device and the network device determine the active time in the fourth understanding.

The second parameter is one of the following:
The second parameter is the first cycle, and this may be applicable to a case in which the terminal device and the network device determine the active time in the first understanding, or determine the active time in the third understanding, or determine the active time in the fourth understanding.

The second parameter is the second cycle, and this may be applicable to a case in which the terminal device and the network device determine the active time in the second understanding, or determine the active time in the third understanding, or determine the active time in the fourth understanding.

The second parameter is min(P1×first cycle, P2×second cycle), and this may be applicable to a case in which the terminal device and the network device determine the active time in the third understanding.

The second parameter is max(P1×first cycle, P2×second cycle), and this may be applicable to a case in which the terminal device and the network device determine the active time in the fourth understanding. An evaluation periodicity of the channel quality measurement determined based on the first parameter may include more new measurement results during reporting, and an actual channel state can be better reflected.

The second parameter is LCM(P1×first cycle, P2×second cycle), and this may be applicable to a case in which the terminal device and the network device determine the active time in the fourth understanding. The evaluation periodicity of the channel quality measurement is determined based on the first parameter, so that more new measurement results can be included during reporting, and an actual channel state can be better reflected.

Max(parameter 1, parameter 2, ..., parameter n) represents a maximum value in the parameter 1, the parameter 2, ..., and the parameter n, min(parameter 1, parameter 2, ..., parameter n) represents a minimum value in the parameter 1, the parameter 2, ..., and the parameter n, and LCM(parameter 1, parameter 2, ..., parameter n) represents a least common multiple of the parameter 1, the parameter 2, ..., and the parameter n.

Q1, Q2, P1, and P2 are all coefficients with positive values. Optionally, P1 and P2 may be determined by the terminal device, configured by the network device, or predefined. In a possible implementation, P1 and P2 are both 1. Optionally, Q1 and Q2 may be determined by the terminal device, configured by the network device, or predefined. In a possible implementation, Q1 and Q2 are both 1.

In this embodiment of this application, the channel quality measurement may be RLM measurement, BFD measurement, or BFR measurement. This is not limited in this embodiment of this application. The following uses the RLM measurement, the BFD measurement, and the BFR measurement as examples to describe reporting periodicities and evaluation periodicities of the three types of measurement.

### (I) RLM measurement

### (1) Reporting periodicity of the RLM measurement

When the first parameter is less than or equal to a first threshold, the reporting periodicity of the RLM measurement is one of the following:
max(K⁽¹⁾_{RLM_report}×first reference signal periodicity, K⁽²⁾_{RLM_report}×first parameter, first duration);
max(K⁽¹⁾_{RLM_report}×first reference signal periodicity, K⁽²⁾_{RLM_report} first parameter);
max(K⁽²⁾_{RLM_report}×first parameter, first duration); and
the first parameter.

When the first parameter is greater than the first threshold, the reporting periodicity of the RLM measurement is:
K⁽³⁾_{RLM_report}×first parameter.

If the first cell is a primary secondary cell (PSCell) and is in a deactivated state, the reporting periodicity of the RLM measurement includes the following cases:
When the first parameter is less than or equal to the first threshold, the reporting periodicity of the RLM measurement is one of the following:
max(K⁽¹⁾_{RLM_report}×first configuration periodicity, K⁽²⁾_{RLM_report}×first parameter, first duration);
max(K⁽¹⁾_{RLM_report}×first configuration periodicity, K⁽²⁾_{RLM_report}×first parameter);
max(K⁽²⁾_{RLM_report}×first parameter, first duration); and
the first parameter.

When the first parameter is greater than the first threshold, the reporting periodicity of the RLM measurement is:
K⁽³⁾_{RLM_report}×first parameter.

Max(parameter 1, parameter 2, ..., parameter n) represents a maximum value in the parameter 1, the parameter 2, ..., and the parameter n, where n is a positive integer.

K⁽¹⁾_{RLM_report}, K⁽²⁾_{RLM_report}, and K⁽³⁾_{RLM_report} are all coefficients with positive values. It may be understood that K⁽¹⁾_{RLM_report}, K⁽²⁾_{RLM_report}, or K⁽³⁾_{RLM_report} may be one value, or may be obtained through calculation by using a plurality of values. The plurality of values may be predefined, configured by the network device, or determined by the terminal device. Optionally, K⁽¹⁾_{RLM_report} and K⁽²⁾_{RLM_report} are both equal to 1.5, and K⁽³⁾_{RLM_report} is equal to 1. Optionally, the first duration is 10 milliseconds.

Optionally, at least one of K⁽¹⁾_{RLM_report}, K⁽²⁾_{RLM_report}, K⁽³⁾_{RLM_report}, the first duration, and the first threshold may be predefined, configured by the network device, or determined by the terminal device.

The first reference signal periodicity is a periodicity of one of N reference signals (RLM-RSs) used for the RLM measurement. Optionally, the reference signal may be a reference signal with a minimum periodicity in the N reference signals.

Optionally, the first configuration periodicity is predefined, or is configured by the network device.

### (2) In-sync evaluation periodicity of the RLM measurement

The following describes an in-sync evaluation periodicity of a first reference signal by using an example in which N reference signals (RLM-RSs) include the first reference signal.

When the second parameter is less than or equal to a second threshold, the in-sync evaluation periodicity of the first reference signal is one of the following:
max(K⁽¹⁾_{RLM_eva_in}×max(periodicity of the first reference signal, second parameter), second duration); and
max(K⁽¹⁾_{RLM_eva_in}×max(periodicity of the first reference signal, second parameter)).

When the second parameter is greater than the second threshold, the in-sync evaluation periodicity of the first reference signal is:
K⁽²⁾_{RLM_eva_in}×second parameter.

If the first cell is a primary secondary cell (PSCell) and is in a deactivated state, the in-sync evaluation periodicity of the first reference signal includes the following cases:
When the second parameter is less than or equal to the second threshold, the in-sync evaluation periodicity of the first reference signal is one of the following:
max(K⁽¹⁾_{RLM_eva_in}×first configuration periodicity, K⁽²⁾_{RLM_eva_in}×second parameter); and
K⁽¹⁾_{RLM_eva_in}×max(first configuration periodicity, second parameter).

When the second parameter is greater than the second threshold, the in-sync evaluation periodicity of the first reference signal is one of the following:
max(K⁽³⁾_{RLM_eva_in}×first configuration periodicity, K⁽⁴⁾_{RLM_eva_in}×first cycle); and
K⁽³⁾_{RLM_eva_in}×max(first configuration periodicity, second parameter).

K⁽¹⁾_{RLM_eva_in}, K⁽²⁾_{RLM_eva_in}, K⁽³⁾_{RLM_eva_in}, and K⁽⁴⁾_{RLM_eva_in} are all coefficients with positive values. It may be understood that K⁽¹⁾_{RLM_eva_in}, K⁽²⁾_{RLM_eva_in}, K⁽³⁾_{RLM_eva_in}, or K⁽⁴⁾_{RLM_eva_in} may be one value, or may be obtained through calculation by using a plurality of values. The plurality of values may be predefined, configured by the network device, or determined by the terminal device.

Optionally, at least one of K⁽¹⁾_{RLM_eva_in}, K⁽²⁾_{RLM_eva_in}, K⁽³⁾_{RLM_eva_in}, K⁽⁴⁾_{RLM_eva_in}, the second duration, and the second threshold may be predefined, configured by the network device, or determined by the terminal device.

Optionally, when an RLM-RS is an SSB or a CSI-RS, K⁽¹⁾_{RLM_eva_in} and K⁽²⁾_{RLM_eva_in} corresponding to the RLM-RS are different.

Optionally, the first threshold is equal to the second threshold. For example, the first threshold and the second threshold are both 10 milliseconds.

### (3) Out-of-sync evaluation periodicity of the RLM measurement

The following describes an out-of-sync evaluation periodicity of a first reference signal by using an example in which N reference signals (RLM-RSs) include the first reference signal.

When the second parameter is less than or equal to a second threshold, the out-of-sync evaluation periodicity of the first reference signal is one of the following:
max(K⁽¹⁾_{RLM_eva_out}×max(periodicity of the first reference signal, second parameter), third duration); and
max(K⁽¹⁾_{RLM_eva_out}×max(periodicity of the first reference signal, second parameter)).

When the second parameter is greater than the second threshold, the out-of-sync evaluation periodicity of the first reference signal is:
K⁽²⁾_{RLM_eva_out}×second parameter.

If the first cell is a primary secondary cell (PSCell) and is in a deactivated state, the out-of-sync evaluation periodicity of the first reference signal includes the following cases:

When the second parameter is less than or equal to the second threshold, the out-of-sync evaluation periodicity of the first reference signal is one of the following:
max(K⁽¹⁾_{RLM_eva_out}×first configuration periodicity, K⁽²⁾_{RLM_eva_out}×second parameter); and
K⁽¹⁾_{RLM_eva_out}×max(first configuration periodicity, second parameter).

When the second parameter is greater than the second threshold, the out-of-sync evaluation periodicity of the first reference signal is one of the following:
(K⁽³⁾_{RLM_eva_out}×first configuration periodicity, K⁽⁴⁾_{RLM_eva_out}×first cycle); and
K⁽³⁾_{RLM_eva_out}×max(first configuration periodicity, second parameter).

K⁽¹⁾_{RLM_eva_out}, K⁽²⁾_{RLM_eva_out}, K⁽³⁾_{RLM_eva_out}, and K⁽⁴⁾_{RLM_eva_out} are all coefficients with positive values. It may be understood that K⁽¹⁾_{RLM_eva_out}, K⁽²⁾_{RLM_eva_out}, K⁽³⁾_{RLM_eva_out}, or K⁽⁴⁾_{RLM_eva_out} may be one value, or may be obtained through calculation by using a plurality of values. The plurality of values may be predefined, configured by the network device, or determined by the terminal device.

Optionally, at least one of K⁽¹⁾_{RLM_eva_out}, K⁽²⁾_{RLM_eva_out}, K⁽³⁾_{RLM_eva_out}, K⁽⁴⁾_{RLM_eva_out}, the third duration, and the second threshold may be predefined, configured by the network device, or determined by the terminal device.

Optionally, the first configuration periodicity is predefined, or is configured by the network device.

Optionally, when an RLM-RS is an SSB or a CSI-RS, K⁽¹⁾_{RLM_eva_out} and K⁽²⁾_{RLM_eva_out} corresponding to the RLM-RS are different.

### (4) RLM measurement relaxation

The following describes an extension of an out-of-sync evaluation periodicity of a first reference signal by using an example in which N reference signals (RLM-RSs) include the first reference signal.

When the N RLM-RSs are N SSBs, for a first SSB in the N SSBs, the method further includes:

If the second parameter is less than or equal to a third threshold, and the first cell satisfies a low mobility criterion and/or a high channel quality criterion, when max(periodicity of the first SSB, second parameter) is less than or equal to the third threshold, an out-of-sync evaluation periodicity of the first SSB is extended to:
max(K⁽¹⁾_{PLM_SSB_relax}×fourth duration, K⁽²⁾_{PLM_SSB_relax}×max(periodicity of the first SSB, second parameter)).

If the second parameter is less than or equal to the third threshold, and the first cell satisfies the low mobility criterion and/or the high channel quality criterion, when max(periodicity of the first SSB, second parameter) is greater than the third threshold and less than a fourth threshold, the out-of-sync evaluation periodicity of the first SSB is extended to:
K⁽³⁾_{PLM_SSB_relax}×max(periodicity of the first SSB, second parameter).

K⁽¹⁾_{PLM_SSB_relax}, K⁽²⁾_{PLM_SSB_relax}, and K⁽³⁾_{PLM_SSB_relax} are all coefficients with positive values. It may be understood that K⁽¹⁾_{PLM_SSB_relax}, K⁽²⁾_{PLM_SSB_relax}, or K⁽³⁾_{PLM_SSB_relax} is one value, or may be obtained through calculation by using a plurality of values. The plurality of values may be predefined, configured by the network device, or determined by the terminal device.

Optionally, at least one of K⁽¹⁾_{PLM_SSB_relax}, K⁽²⁾_{PLM_SSB_relax}, K⁽³⁾_{PLM_SSB_relax}, the fourth duration, the third threshold, and the fourth threshold may be predefined, configured by the network device, or determined by the terminal device. Optionally, the fourth threshold is 80 milliseconds, or the fourth threshold is 160 milliseconds.

When the N RLM-RSs are N CSI-RSs, for a first CSI-RS in the N CSI-RSs, the method further includes:
If the second parameter is less than or equal to a third threshold, and the first cell satisfies a low mobility criterion and/or a high channel quality criterion, when max(periodicity of the first CSI-RS, second parameter) is less than or equal to the third threshold, an out-of-sync evaluation periodicity of the first CSI-RS is extended to:
max(K⁽¹⁾_{PLM_CSI-RS_relax}×fourth duration, K⁽²⁾_{PLM_CSI-RS_relax}×max(periodicity of the first CSI-RS, second parameter)).

K⁽¹⁾_{PLM_CSI-RS_relax} and K⁽²⁾_{PLM_CSI-RS_relax} are both coefficients with positive values. It may be understood that K⁽¹⁾_{PLM_CSI-RS_relax} or K⁽²⁾_{PLM_CSI-RS_relax} is one value, or may be obtained through calculation by using a plurality of values. The plurality of values may be predefined, configured by the network device, or determined by the terminal device.

Optionally, at least one of K⁽¹⁾_{PLM_CSI-RS_relax}, K⁽²⁾_{PLM_CSI-RS_relax}, the fourth duration, the third threshold, and the fourth threshold may be predefined, configured by the network device, or determined by the terminal device. Optionally, the fourth threshold is 80 milliseconds, or the fourth threshold is 160 milliseconds.

Optionally, when the second parameter is greater than the third threshold, the out-of-sync evaluation periodicity is not relaxed. That is, no out-of-sync evaluation periodicity of any RLM-RS is extended.

### (II) BFD measurement

### (1) Reporting periodicity of the BFD measurement

When the first parameter is less than or equal to a first threshold, the reporting periodicity of the BFD measurement is one of the following:
max(K⁽¹⁾_{BFD_report}×first reference signal periodicity, K⁽²⁾_{BFD_report}×first parameter, fifth duration);
max(K⁽¹⁾_{BFD_report}×first reference signal periodicity, K⁽²⁾_{BFD_report}×first parameter);
max(K⁽²⁾_{BFD_report}×first parameter, fifth duration); and
the first parameter.

When the first parameter is greater than the first threshold, the reporting periodicity of the BFD measurement is:
K⁽³⁾_{BFD_report}×first parameter.

When the first cell is a primary secondary cell (PSCell) and is in a deactivated state, the reporting periodicity of the BFD measurement includes the following cases:
When the first parameter is less than or equal to the first threshold, the reporting periodicity of the BFD measurement is one of the following:
max(K⁽¹⁾_{BFD_report}×first configuration periodicity, K⁽²⁾_{BFD_report}×first parameter, fifth duration);
max(K⁽¹⁾_{BFD_report}×first configuration periodicity, K⁽²⁾_{BFD_report}×first parameter);
max(K⁽²⁾_{BFD_report}×first parameter, fifth duration); and
the first parameter.

When the first parameter is greater than the first threshold, the reporting periodicity of the BFD measurement is:
K⁽³⁾_{BFD_report}×first parameter.

K⁽¹⁾_{BFD_report}, K⁽²⁾_{BFD_report}, and K⁽³⁾_{BFD_report} are all coefficients with positive values. It may be understood that K⁽¹⁾_{BFD_report}, K⁽²⁾_{BFD_report}, or K⁽³⁾_{BFD_report} may be one value, or may be obtained through calculation by using a plurality of values. The plurality of values may be predefined, configured by the network device, or determined by the terminal device.

Optionally, at least one of K⁽¹⁾_{BFD_report}, K⁽²⁾_{BFD_report}, K⁽³⁾_{BFD_report}, the fifth duration, and the first threshold may be predefined, configured by the network device, or determined by the terminal device.

The first reference signal periodicity is a periodicity of one of N reference signals (BFD-RSs) used for BFD measurement. Optionally, the reference signal may be a reference signal with a minimum periodicity in the N reference signals.

Optionally, the first configuration periodicity is predefined, or is configured by the network device.

### (2) BFD evaluation periodicity

The following describes an extension of an out-of-sync evaluation periodicity of a first reference signal by using an example in which N reference signals (BFD-RSs) include the first reference signal.

When the second parameter is less than or equal to a second threshold, the evaluation periodicity of the first reference signal is one of the following:
max(K⁽¹⁾_{BFD_eva}×max(periodicity of the first reference signal, second parameter), sixth duration); and
max(K⁽¹⁾_{BFD_eva}×max(periodicity of the first reference signal, second parameter)).

When the second parameter is greater than the second threshold, the evaluation periodicity of the first reference signal is:
K⁽²⁾_{BFD_eva}×second parameter.

When the first cell is a primary secondary cell (PSCell) and is in a deactivated state, the evaluation periodicity of the first reference signal may include the following cases:

When the second parameter is less than or equal to the second threshold, the evaluation periodicity of the first reference signal is:
K⁽³⁾_{BFD_eva}×max(first configuration periodicity, second parameter).

When the second parameter is greater than the second threshold, the evaluation periodicity of the first reference signal is:
K⁽⁴⁾_{BFD_eva}×max(first configuration periodicity, second parameter).

K⁽¹⁾_{BFD_eva}, K⁽²⁾_{BFD_eva}, K⁽³⁾_{BFD_eva}, and K⁽⁴⁾_{BFD_eva} are all coefficients with positive values. It may be understood that K⁽¹⁾_{BFD_eva}, K⁽²⁾_{BFD_eva}, K⁽³⁾_{BFD_eva}, or K⁽⁴⁾_{BFD_eva} may be one value, or may be obtained through calculation by using a plurality of values. The plurality of values may be predefined, configured by the network device, or determined by the terminal device.

Optionally, at least one of K⁽¹⁾_{BFD_eva}, K⁽²⁾_{BFD_eva}, K⁽³⁾_{BFD_eva}, K⁽⁴⁾_{BFD_eva}, the sixth duration, and the first threshold may be predefined, configured by the network device, or determined by the terminal device.

Optionally, the first configuration periodicity is predefined, or is configured by the network device.

### (3) BFD measurement relaxation

The following describes an extension of an evaluation periodicity of a first reference signal by using an example in which N reference signals (BFD-RSs) include the first reference signal.

When the N BFD-RSs are N SSBs, for a first SSB in the N SSBs, the method further includes:
If the second parameter is less than or equal to a third threshold, and the first cell satisfies a low mobility criterion and/or a high channel quality criterion, when max(periodicity of the first SSB, second parameter) is less than or equal to the third threshold, an evaluation periodicity of the first SSB is extended to:
max(K⁽¹⁾_{BFD_SSB_relax}×seventh duration, K⁽²⁾_{BFD_SSB_relax}×max(periodicity of the first SSB, second parameter)).

If the second parameter is less than or equal to the third threshold, and the first cell satisfies the low mobility criterion and/or the high channel quality criterion, when max(periodicity of the first SSB, second parameter) is greater than the third threshold and less than a fourth threshold, the evaluation periodicity of the first SSB is extended to one of the following:
max(K⁽³⁾_{BFD_SSB_relax}×max(periodicity of the first SSB, second parameter), eighth duration); and
max(K⁽³⁾_{BFD_SSB_relax}×max(periodicity of the first SSB, second parameter)).

K⁽¹⁾_{BFD_SSB_relax}, K⁽²⁾_{BFD_SSB_relax}, and K⁽³⁾_{BFD_SSB_relax} are all coefficients with positive values. It may be understood that K⁽¹⁾_{BFD_SSB_relax}, K⁽²⁾_{BFD_SSB_relax}, or K⁽³⁾_{BFD_SSB_relax} is one value, or may be obtained through calculation by using a plurality of values. The plurality of values may be predefined, configured by the network device, or determined by the terminal device.

Optionally, at least one of K⁽¹⁾_{BFD_SSB_relax}, K⁽²⁾_{BFD_SSB_relax}, K⁽³⁾_{BFD_SSB_relax}, the fourth duration, the third threshold, and the fourth threshold may be predefined, configured by the network device, or determined by the terminal device.

When the N BFD-RSs are N CSI-RSs, for a first CSI-RS in the N CSI-RSs, the method further includes:

If the second parameter is less than or equal to a third threshold, and the first cell satisfies a low mobility criterion and/or a high channel quality criterion, when max(periodicity of the first CSI-RS, second parameter) is less than or equal to the third threshold, an evaluation periodicity of the first CSI-RS is extended to:
max(K⁽¹⁾_{BFD_CSI_RS_relax}×seventh duration, K⁽²⁾_{BFD_CSI-RS_relax}×max(periodicity of the first CSI-RS, second parameter)).

K⁽¹⁾_{BFD_CSI-RS_relax} and K⁽²⁾_{BFD_CSI-RS_relax} are both coefficients with positive values. It may be understood that K⁽¹⁾_{BFD_CSI-RS_relax} or K⁽²⁾_{BFD_CSI-RS_relax} is one value, or may be obtained through calculation by using a plurality of values. The plurality of values may be predefined, configured by the network device, or determined by the terminal device.

Optionally, at least one of K⁽¹⁾_{BFD_CSI-RS_relax}, K⁽²⁾_{BFD_CSI-RS_relax}, the seventh duration, and the third threshold may be predefined, configured by the network device, or determined by the terminal device.

Optionally, when the second parameter is greater than the third threshold, the evaluation periodicity of the BFD measurement is not relaxed. That is, no evaluation periodicity of any BFD-RS is extended.

It may be understood that values of the first threshold, the second threshold, and the third threshold in the reporting periodicity and the evaluation periodicity of the BFD measurement may be the same as or different from values of related thresholds in the reporting periodicity and the evaluation periodicity of the RLM measurement.

### (III) BFR measurement

When the second parameter is less than or equal to a second threshold, an evaluation periodicity of a first reference signal is:
max(K⁽¹⁾_{BFR_eva}×periodicity of the first reference signal, eighth duration).

When the second parameter is greater than the second threshold, the evaluation periodicity of the first reference signal is:
K⁽²⁾_{BFR_eva}×second parameter.

K⁽¹⁾_{BFR_eva} and K⁽²⁾_{BFR_eva} are both coefficients with positive values. It may be understood that K⁽¹⁾_{BFR_eva} or K⁽²⁾_{BFR_eva} is one value, or may be obtained through calculation by using a plurality of values. The plurality of values may be predefined, configured by the network device, or determined by the terminal device.

Optionally, at least one of K⁽¹⁾_{BFR_eva}, K⁽²⁾_{BFR_eva}, the second threshold, and the eighth duration may be predefined, configured by the network device, or determined by the terminal device.

It may be understood that a value of the second threshold in the reporting periodicity and the evaluation periodicity of the BFR measurement may be the same as or different from a value of a related threshold in the reporting periodicity and the evaluation periodicity of the RLM measurement.

Step 804: The terminal device determines a measurement result of the channel quality measurement based on the N reference signals, where N is a positive integer. In this step, the terminal device may perform corresponding reporting based on a reporting periodicity of the channel quality measurement according to the measurement result.

It may be understood that, in the procedure shown in FIG. 8, a sequence of step 801 and step 802 is merely an example. This is not limited in this embodiment of this application. For example, the network device may first send the first indication information, and then send the second indication information.

In a possible implementation, when the cell DTX/DRX configuration is disabled and the C-DRX configuration is enabled for the first cell of the terminal device, channel quality measurement may be performed according to a method defined when C-DRX is configured in an existing protocol. For example, a reporting periodicity of RLM, and an in-sync evaluation periodicity and an out-of-sync evaluation periodicity of each RLM-RS are determined according to the existing protocol.

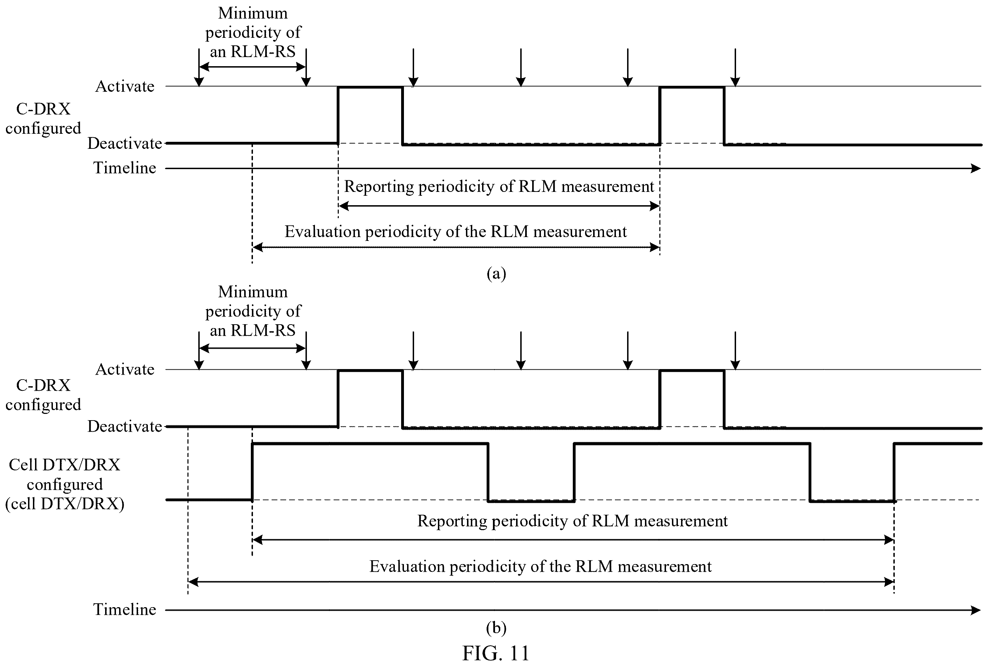

Based on the procedure shown in FIG. 8, when cell DTX/DRX is enabled and C-DRX is enabled, the terminal device may determine, based on a cell DTX/DRX cycle and/or a C-DRX cycle, a reporting periodicity of the channel quality measurement and an evaluation periodicity of a reference signal used for the channel quality measurement, so that reporting can be performed based on a measurement result in the evaluation periodicity when a reporting moment arrives. FIG. 11 is a diagram of an example of a reporting periodicity and an evaluation periodicity of RLM measurement after cell DTX/DRX and C-DRX is enabled for the first cell by using the RLM measurement as an example. As shown in FIG. 11, (a) shows a reporting periodicity and an evaluation periodicity of the RLM measurement when only C-DRX is enabled for the first cell, and (b) shows a reporting periodicity and an evaluation periodicity of the RLM measurement when C-DRX and cell DTX/DRX are enabled for the first cell.

When cell DTX/DRX is independently configured for the first cell on the network side, or both Cell DTX/DRX and C-DRX are configured for the first cell, a channel quality measurement procedure of the terminal device is affected. For example, when the network device configures cell DTX/DRX for a PCell of the terminal device, and the cell is in inactive time in a cell DTX/DRX cycle, the network device does not send an SSB and/or a periodic CSI-RS. In the foregoing embodiment of this application, for this case, a method for determining the reporting periodicity and the evaluation periodicity of the channel quality measurement is provided, so that the terminal device can measure channel quality by measuring a reference signal in the time period.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

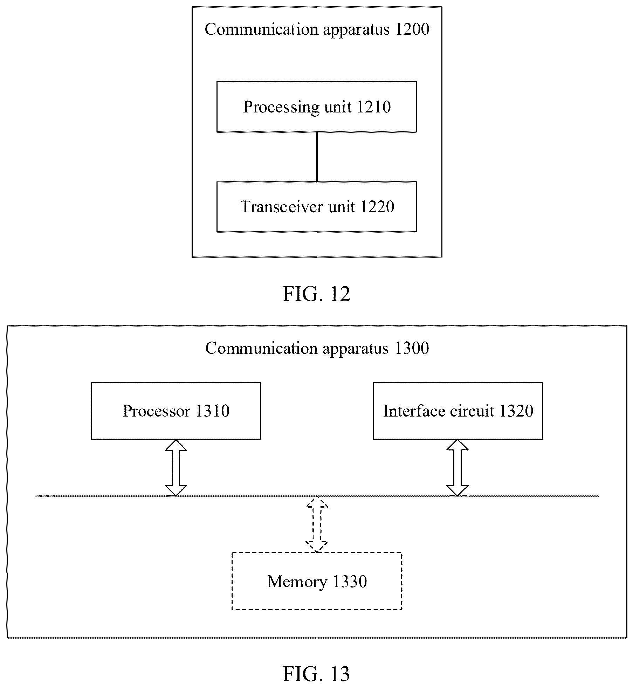

FIG. 12 and FIG. 13 are diagrams of structures of possible communication apparatuses according to embodiments of this application. These communication apparatuses may be configured to implement functions of the terminal device in the foregoing method embodiments. Therefore, beneficial effect of the foregoing method embodiments can also be implemented. In this embodiment of this application, the communication apparatus may be one of the terminals 120a to 120j shown in FIG. 1, or may be a module (for example, a chip) used in the terminal.

As shown in FIG. 12, a communication apparatus 1200 includes a processing unit 1210 and a transceiver unit 1220. The communication apparatus 1200 is configured to implement functions of the terminal device in the method embodiment shown in FIG. 5 or FIG. 8.

When the communication apparatus 1200 is configured to implement a function of the terminal device in the method embodiment shown in FIG. 5, the transceiver unit 1220 is configured to receive first indication information sent by a network device, where the first indication information indicates that a first channel is not transmitted in a first cell in a first time period of a first cycle and indicates that the first channel is transmitted in the first cell in a second time period of the first cycle. The processing unit 1210 is configured to determine a reporting periodicity and/or an evaluation periodicity of channel quality measurement based on the first cycle, where the channel quality measurement is RLM measurement, BFD measurement, or BFR measurement. The processing unit 1210 is further configured to determine a measurement result of the channel quality measurement based on N reference signals, where N is a positive integer.

When the communication apparatus 1200 is configured to implement a function of the terminal device in the method embodiment shown in FIG. 8, the transceiver unit 1220 is configured to receive first indication information and second indication information that are sent by a network device, where the first indication information indicates that a first channel is not transmitted in a first cell in a first time period of a first cycle and indicates that the first channel is transmitted in the first cell in a second time period of the first cycle, and the second indication information indicates that a second channel is not transmitted in the first cell in a third time period of a second cycle and indicates that the second channel is transmitted in the first cell in a fourth time period of the second cycle. The processing unit 1210 is configured to determine a reporting periodicity and/or an evaluation periodicity of channel quality measurement based on the first cycle and/or the second cycle, where the channel quality measurement is radio link monitoring RLM measurement, beam failure detection BFD measurement, or beam failure recovery BFR measurement. The processing unit 1210 is further configured to determine a measurement result of the channel quality measurement based on N reference signals, where N is a positive integer.

For more detailed descriptions of the processing unit 1210 and the transceiver unit 1220, directly refer to the related descriptions in the method embodiments shown in FIG. 5 and FIG. 8. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the method shown in FIG. 5 or FIG. 8, the processor 1310 is configured to implement a function of the processing unit 1210, and the interface circuit 1320 is configured to implement a function of the transceiver unit 1220.

When the communication apparatus is a chip used in a terminal device, the terminal chip implements a function of the terminal device in the foregoing method embodiments. The terminal chip receives information from another module (for example, a radio frequency module or an antenna) in the terminal device, where the information is sent by a network device to the terminal; or the terminal chip sends information to another module (for example, a radio frequency module or an antenna) in the terminal device, where the information is sent by the terminal device to a network device.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes a processor and a memory. As shown in FIG. 13, the communication apparatus 1300 includes a processor 1310 and a memory 1330. The processor 1310 is coupled to the memory 1330. The memory 1330 stores instructions. When the instructions stored in the memory 1330 are executed by the processor 1310, the communication apparatus 1300 performs the method performed by the terminal device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A channel quality measurement method, wherein the method is performed by a terminal device and comprises:
receiving first indication information sent by a network device, wherein the first indication information indicates that a first channel is not transmitted in a first cell in a first time period of a first cycle and indicates that the first channel is transmitted in the first cell in a second time period of the first cycle;
determining a reporting periodicity and/or an evaluation periodicity of channel quality measurement based on the first cycle, wherein the channel quality measurement is radio link monitoring RLM measurement, beam failure detection BFD measurement, or beam failure recovery BFR measurement; and
determining a measurement result of the channel quality measurement based on N reference signals, wherein N is a positive integer.

2. The method according to claim 1, wherein the channel quality measurement is the RLM measurement; and
the first cycle is less than or equal to a first threshold, a reporting periodicity of the RLM measurement is max(K⁽¹⁾_{RLM_report}×first reference signal periodicity, K⁽²⁾_{RLM_report}×first cycle, first duration), and the first reference signal periodicity is a periodicity of one of the N reference signals; or
the first cycle is greater than the first threshold, and the reporting periodicity of the RLM measurement is K⁽³⁾_{RLM_report}×first cycle, wherein
K⁽¹⁾_{RLM_report}, K⁽²⁾_{RLM_report}, and K⁽³⁾_{RLM_report} are all coefficients with positive values, and max(parameter 1, parameter 2, ..., parameter n) represents a maximum value in the parameter 1, the parameter 2, ..., and the parameter n, wherein n is a positive integer.

3. The method according to claim 1, wherein the channel quality measurement is the RLM measurement, and the first cell is a primary secondary cell PSCell and is in a deactivated state; and
the first cycle is less than or equal to a first threshold, a reporting periodicity of the RLM measurement is max(K⁽¹⁾_{RLM_report}×first configuration periodicity, K⁽²⁾_{RLM_report}×first cycle, first duration), and the first reference signal periodicity is a periodicity of one of the N reference signals; or
the first cycle is greater than the first threshold, and the reporting periodicity of the RLM measurement is K⁽³⁾_{RLM_report}×first cycle, wherein
K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

4. The method according to any one of claims 1 to 3, wherein the channel quality measurement is the RLM measurement, and the N reference signals comprise a first reference signal; and
if the first cycle is less than or equal to a second threshold, an in-sync IS evaluation periodicity of the first reference signal is max(K⁽¹⁾_{RLM_eva_in}×max(periodicity of the first reference signal, first cycle), second duration); or
if the first cycle is greater than the second threshold, the IS evaluation periodicity of the first reference signal is K⁽²⁾_{RLM_eva_in}×first cycle, wherein
K⁽¹⁾_{RLM_eva_in} and K⁽²⁾_{RLM_eva_in} are both coefficients with positive values, and max(parameter 1, parameter 2, ..., parameter n) represents a maximum value in the parameter 1, the parameter 2, ..., and the parameter n, wherein n is a positive integer.

5. The method according to any one of claims 1 to 3, wherein the channel quality measurement is the RLM measurement, the first cell is a primary secondary cell PSCell and is in a deactivated state, and the N reference signals comprise a first reference signal; and
if the first cycle is less than or equal to a second threshold, an IS evaluation periodicity of the first reference signal is max(K⁽¹⁾_{RLM_eva_in}×first configuration periodicity, K⁽²⁾_{RLM_eva_in}×first cycle); or
if the first cycle is greater than the second threshold, the IS evaluation periodicity of the first reference signal is max(K⁽³⁾_{RLM_eva_in}×first configuration periodicity, K⁽⁴⁾_{RLM_eva_in}×first cycle), wherein
K⁽¹⁾_{RLM_eva_in}, K⁽²⁾_{RLM_eva_}in, K⁽³⁾_{RLM_eva_in}, and K⁽⁴⁾_{RLM_eva_in} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

6. The method according to any one of claims 1 to 5, wherein the channel quality measurement is the RLM measurement, and the N reference signals comprise the first reference signal; and
if the first cycle is less than or equal to the second threshold, an out-of-sync OOS evaluation periodicity of the first reference signal is max(K⁽¹⁾_{RLM_eva_out}×max(periodicity of the first reference signal, first cycle), third duration); or
if the first cycle is greater than the second threshold, the OOS evaluation periodicity of the first reference signal is K⁽²⁾_{RLM_eva_out}×first cycle, wherein
K⁽¹⁾_{RLM_eva_out} and K⁽²⁾_{RLM_eva_out} are both coefficients with positive values, and max(parameter 1, parameter 2, ..., parameter n) represents a maximum value in the parameter 1, the parameter 2, ..., and the parameter n, wherein n is a positive integer.

7. The method according to any one of claims 1 to 5, wherein the channel quality measurement is the RLM measurement, the first cell is a primary secondary cell PSCell and is in a deactivated state, and the N reference signals comprise the first reference signal; and
if the first cycle is less than or equal to the second threshold, an OOS evaluation periodicity of the first reference signal is max(K⁽¹⁾_{RLM_eva_out}×first configuration periodicity, K⁽²⁾_{RLM_eva_out}×first cycle); or
if the first cycle is greater than the second threshold, the out-of-sync evaluation periodicity of the first reference signal is max(K⁽³⁾_{RLM_eva_out}×first configuration periodicity, K⁽⁴⁾_{RLM_eva_out}×first cycle), wherein
K⁽¹⁾_{RLM_eva_out}, K⁽²⁾_{RLM_eva_}out, K⁽³⁾_{RLM_eva_out}, and K⁽⁴⁾_{RLM_eva_out} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

8. The method according to any one of claims 1 to 7, wherein the channel quality measurement is the RLM measurement, the N reference signals are N synchronization signal/physical broadcast channel blocks SSBs, the N SSBs comprise a first SSB, and the method further comprises:
if the first cycle is less than or equal to a third threshold, and the first cell satisfies a low mobility criterion and/or a high channel quality criterion, when max(periodicity of the first SSB, first cycle) is less than or equal to the third threshold, extending an OOS evaluation periodicity of the first SSB to max(K⁽¹⁾_{PLM_SSB_relax}×fourth duration, K⁽²⁾_{PLM_SSB_relax}×max(periodicity of the first SSB, first cycle)); or
if the first cycle is less than or equal to the third threshold, and the first cell satisfies the low mobility criterion and/or the high channel quality criterion, when max(periodicity of the first SSB, first cycle) is greater than the third threshold and less than a fourth threshold, extending the OOS evaluation periodicity of the first SSB to K⁽³⁾_{PLM_SSB_relax}×max(periodicity of the first SSB, first cycle), wherein
K⁽¹⁾_{PLM_SSB_relax}, K⁽²⁾_{PLM_SSB_relax}, and K⁽³⁾_{PLM_SSB_relax} are all coefficients with positive values, and max(parameter 1, parameter 2, ..., parameter n) represents a maximum value in the parameter 1, the parameter 2, ..., and the parameter n, wherein n is a positive integer.

9. The method according to any one of claims 1 to 7, wherein the channel quality measurement is the RLM measurement, the N reference signals are N channel state information-reference signals CSI-RSs, the N CSI-RSs comprise a first CSI-RS, and the method further comprises:
if the first cycle is less than or equal to a third threshold, and the first cell satisfies a low mobility criterion and/or a high channel quality criterion, when max(periodicity of the first CSI-RS, first cycle) is less than or equal to the third threshold, extending an OOS evaluation periodicity of the first CSI-RS to max(K⁽¹⁾_{PLM_CSI-RS_relax}×fourth duration, K⁽²⁾_{PLM_CSI-RS_relax}×max(periodicity of the first CSI-RS, first cycle)), wherein
K⁽¹⁾_{PLM_CSI-RS_relax} and K⁽²⁾_{PLM_CSI-RS_relax} are both coefficients with positive values, and max(parameter 1, parameter 2, ..., parameter n) represents a maximum value in the parameter 1, the parameter 2, ..., and the parameter n, wherein n is a positive integer.

10. The method according to claim 1, wherein the channel quality measurement is the BFD measurement; and
the first cycle is less than or equal to a first threshold, a reporting periodicity of the BFD measurement is max(K⁽¹⁾_{BFD-report}×first reference signal periodicity, K⁽²⁾_{BFD_report}×first cycle), and the first reference signal periodicity is a periodicity of one of the N reference signals; or
the first cycle is greater than the first threshold, and the reporting periodicity of the BFD measurement is K⁽³⁾_{BFD_report}×first cycle, wherein
K⁽¹⁾_{BFD_report}, K⁽²⁾_{BFD_report}, and K⁽³⁾_{BFD_report} are all coefficients with positive values, and max(parameter 1, parameter 2, ..., parameter n) represents a maximum value in the parameter 1, the parameter 2, ..., and the parameter n, wherein n is a positive integer.

11. The method according to claim 1, wherein the channel quality measurement is the BFD measurement, and the first cell is a primary secondary cell PSCell and is in a deactivated state; and
the first cycle is less than or equal to a first threshold, a reporting periodicity of the BFD measurement is max(K⁽¹⁾_{BFD_report}×first configuration periodicity, K⁽²⁾_{BFD_report}×first cycle), and the first reference signal periodicity is a periodicity of one of the N reference signals; or
the first cycle is greater than the first threshold, and the reporting periodicity of the BFD measurement is K⁽³⁾_{BFD_report}×first cycle, wherein
K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

12. The method according to claim 1, 10, or 11, wherein the channel quality measurement is the BFD measurement, and the N reference signals comprise a first reference signal; and
if the first cycle is less than or equal to a second threshold, an evaluation periodicity of the first reference signal is max(K⁽¹⁾_{BFD_eva}×max(periodicity of the first reference signal, first cycle), sixth duration); or
if the first cycle is greater than the second threshold, the evaluation periodicity of the first reference signal is K⁽²⁾_{BFD_eva}×first cycle, wherein
K⁽¹⁾_{BFD_eva} and K⁽²⁾_{BFD_eva} are both coefficients with positive values, and max(parameter 1, parameter 2, ..., parameter n) represents a maximum value in the parameter 1, the parameter 2, ..., and the parameter n, wherein n is a positive integer.

13. The method according to claim 1, 10, or 11, wherein the channel quality measurement is the BFD measurement, the first cell is a primary secondary cell PSCell and is in a deactivated state, and the N reference signals comprise a first reference signal; and
if the first cycle is less than or equal to a second threshold, an evaluation periodicity of the first reference signal is K⁽³⁾_{BFD_eva}×max(first configuration periodicity, first cycle); or
if the first cycle is greater than the second threshold, the evaluation periodicity of the first reference signal is K⁽⁴⁾_{BFD_eva}×max(first configuration periodicity, first cycle), wherein
K⁽³⁾_{BFD_eva} and K⁽⁴⁾_{BFD_eva} are both coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

14. The method according to any one of claims 1 and 10 to 13, wherein the channel quality measurement is the BFD measurement, the N reference signals are N SSBs, the N SSBs comprise a first SSB, and the method further comprises:
if the first cycle is less than or equal to a third threshold, and the first cell satisfies a low mobility criterion and/or a high channel quality criterion, when max(periodicity of the first SSB, first cycle) is less than or equal to the third threshold, extending an evaluation periodicity of the first SSB to max(K⁽¹⁾_{BFD_SSB_relax}×seventh duration, K⁽²⁾_{BFD_SSB_relax}×max(periodicity of the first SSB, first cycle)); or
if the first cycle is less than or equal to the third threshold, and the first cell satisfies the low mobility criterion and/or the high channel quality criterion, when max(periodicity of the first SSB, first cycle) is greater than the third threshold and less than a fourth threshold, extending the evaluation periodicity of the first SSB to max(K⁽³⁾_{BFD_SSB_relax}×max(periodicity of the first SSB, first cycle), eighth duration), wherein
K⁽¹⁾_{BFD_SSB_relax}, K⁽²⁾_{BFD_SSB_relax}, and K⁽³⁾_{BFD_SSB_relax} are all coefficients with positive values, and max(parameter 1, parameter 2, ..., parameter n) represents a maximum value in the parameter 1, the parameter 2, ..., and the parameter n, wherein n is a positive integer.

15. The method according to any one of claims 1 and 10 to 13, wherein the channel quality measurement is the BFD measurement, the N reference signals are N CSI-RSs, the N CSI-RSs comprise a first CSI-RS, and the method further comprises:
if the first cycle is less than or equal to a third threshold, and the first cell satisfies a low mobility criterion and/or a high channel quality criterion, when max(periodicity of the first CSI-RS, first cycle) is less than or equal to the third threshold, extending an OOS evaluation periodicity of the first CSI-RS to max(K⁽¹⁾_{BFD_CSI-RS_relax}×seventh duration, K⁽²⁾_{BFD_CSI-RS_relax}×max(periodicity of the first CSI-RS, first cycle)), wherein
K⁽¹⁾_{BFD_CSI-RS_relax} and K⁽²⁾_{BFD_CSI-RS_relax} are both coefficients with positive values, and max(parameter 1, parameter 2, ..., parameter n) represents a maximum value in the parameter 1, the parameter 2, ..., and the parameter n, wherein n is a positive integer.

16. The method according to claim 1, wherein the channel quality measurement is the BFR measurement; and
if the first cycle is less than or equal to a second threshold, an evaluation periodicity of the first reference signal is max(K⁽¹⁾_{BFR_eva}×periodicity of the first reference signal, eighth duration); or
if the first cycle is greater than the second threshold, the evaluation periodicity of the first reference signal is K⁽²⁾_{BFR_eva}×first cycle, wherein
K⁽¹⁾_{BFR_eva} and K⁽²⁾_{BFR_eva} are both coefficients with positive values, and max(parameter 1, parameter 2, ..., parameter n) represents a maximum value in the parameter 1, the parameter 2, ..., and the parameter n, wherein n is a positive integer.

17. The method according to any one of claims 1 to 16, wherein the first indication information indicates a cell discontinuous transmission/discontinuous reception cell DTX/DRX configuration.

18. The method according to any one of claims 1 to 17, wherein the first channel is a downlink channel, or the first channel comprises a downlink channel and an uplink channel; and
the uplink channel comprises one or more of the following channel types: a configured grant physical uplink shared channel CG PUSCH, a hybrid automatic repeat request acknowledgment HARQ-ACK of a semi-persistent scheduled physical downlink shared channel SPS PDSCH, a scheduling request SR, a physical random access channel PRACH, a random access message A, and a random access message 3; or
the downlink channel comprises one or more of the following channel types: a physical downlink control channel PDCCH scrambled by a modulation and coding scheme-cell-radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal/physical broadcast channel block SSB, system information, a paging message, a random access message 2, a random access message 4, a random access message B, a beam failure recovery BFR, or a semi-persistent scheduled SPS PDSCH.

19. A channel quality measurement method, wherein a terminal device comprises:
receiving first indication information and second indication information that are sent by a network device, wherein the first indication information indicates that a first channel is not transmitted in a first cell in a first time period of a first cycle and indicates that the first channel is transmitted in the first cell in a second time period of the first cycle, and the second indication information indicates that a second channel is not transmitted in the first cell in a third time period of a second cycle and indicates that the second channel is transmitted in the first cell in a fourth time period of the second cycle;
determining a reporting periodicity and/or an evaluation periodicity of channel quality measurement based on the first cycle and/or the second cycle, wherein the channel quality measurement is radio link monitoring RLM measurement, beam failure detection BFD measurement, or beam failure recovery BFR measurement; and
determining a measurement result of the channel quality measurement based on N reference signals, wherein N is a positive integer.

20. The method according to claim 19, wherein determining the reporting periodicity of the channel quality measurement based on the first cycle and/or the second cycle comprises: determining the reporting periodicity of the channel quality measurement based on a first parameter; and
determining the evaluation periodicity of the channel quality measurement based on the first cycle and/or the second cycle comprises: determining the evaluation periodicity of the channel quality measurement based on a second parameter, wherein
the first parameter is one of the following:
the first parameter is the first cycle;
the first parameter is the second cycle;
the first parameter is min(Q1×first cycle, Q2×second cycle);
the first parameter is max(Q1×first cycle, Q2×second cycle); and
the first parameter is LCM(Q1×first cycle, Q2×second cycle);
the second parameter is one of the following:
the second parameter is the first cycle;
the second parameter is the second cycle;
the second parameter is min(P1×first cycle, P2×second cycle);
the second parameter is max(P1×first cycle, P2×second cycle); and
the second parameter is LCM(P1×first cycle, P2×second cycle); and
Q1, Q2, P1, and P2 are all coefficients with positive values, max(parameter 1, parameter 2, ..., parameter n) represents a maximum value in the parameter 1, the parameter 2, ..., and the parameter n, min(parameter 1, parameter 2, ..., parameter n) represents a minimum value in the parameter 1, the parameter 2, ..., and the parameter n, and LCM(parameter 1, parameter 2, ..., parameter n) represents a least common multiple of the parameter 1, the parameter 2, ..., and the parameter n.

21. The method according to claim 20, wherein the channel quality measurement is the RLM measurement; and
the first parameter is less than or equal to a first threshold, a reporting periodicity of the RLM measurement is max(K⁽¹⁾_{RLM_report}×first reference signal periodicity, K⁽²⁾_{RLM_report}×first parameter, first duration), and the first reference signal periodicity is a periodicity of one of the N reference signals; or
the first parameter is greater than the first threshold, and the reporting periodicity of the RLM measurement is K⁽³⁾_{RLM_report}×first parameter, wherein
K⁽¹⁾_{RLM_report}, K⁽²⁾_{RLM_report}, and K⁽³⁾_{RLM_report} are all coefficients with positive values, and max(parameter 1, parameter 2, ..., parameter n) represents a maximum value in the parameter 1, the parameter 2, ..., and the parameter n, wherein n is a positive integer.

22. The method according to claim 20, wherein the channel quality measurement is the RLM measurement, and the first cell is a primary secondary cell PSCell and is in a deactivated state; and
the first parameter is less than or equal to a first threshold, a reporting periodicity of the RLM measurement is max(K⁽¹⁾_{RLM_report}×first configuration periodicity, K⁽²⁾_{RLM_report}×first parameter, first duration), and the first reference signal periodicity is a periodicity of one of the N reference signals; or
the first parameter is greater than the first threshold, and the reporting periodicity of the RLM measurement is K⁽³⁾_{RLM_report}×first parameter, wherein
K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

23. The method according to any one of claims 20 to 22, wherein the channel quality measurement is the RLM measurement, and the N reference signals comprise a first reference signal; and
if the second parameter is less than or equal to a second threshold, an in-sync IS evaluation periodicity of the first reference signal is max(K⁽¹⁾_{RLM_eva_in}×max(periodicity of the first reference signal, second parameter), second duration); or
if the second parameter is greater than the second threshold, the IS evaluation periodicity of the first reference signal is K⁽²⁾_{RLM_eva_in}×second parameter, wherein
K⁽¹⁾_{RLM_eva_in} and K⁽²⁾_{RLM_eva_in} are both coefficients with positive values, and max(parameter 1, parameter 2, ..., parameter n) represents a maximum value in the parameter 1, the parameter 2, ..., and the parameter n, wherein n is a positive integer.

24. The method according to any one of claims 20 to 22, wherein the channel quality measurement is the RLM measurement, the first cell is a primary secondary cell PSCell and is in a deactivated state, and the N reference signals comprise a first reference signal; and
if the second parameter is less than or equal to a second threshold, an IS evaluation periodicity of the first reference signal is max(K⁽¹⁾_{RLM_eva_in}×first configuration periodicity, K⁽²⁾_{RLM_eva_in}×second parameter); or
if the second parameter is greater than the second threshold, the IS evaluation periodicity of the first reference signal is max(K⁽²⁾_{RLM_eva_in}×first configuration periodicity, K⁽⁴⁾_{RLM_eva_in}×second parameter), wherein
K⁽¹⁾_{RLM_eva_in}, K⁽²⁾_{RLM_eva_in}, K⁽³⁾_{RLM_eva_in}, and K⁽⁴⁾_{RLM_eva_in} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

25. The method according to any one of claims 20 to 24, wherein the channel quality measurement is the RLM measurement, and the N reference signals comprise the first reference signal; and
if the second parameter is less than or equal to the second threshold, an OOS evaluation periodicity of the first reference signal is max(K⁽¹⁾_{RLM_eva_out}×max(periodicity of the first reference signal, second parameter), third duration); or
if the second parameter is greater than the second threshold, the OOS evaluation periodicity of the first reference signal is K⁽²⁾_{RLM_eva_out}×second parameter, wherein
K⁽¹⁾_{RLM_eva_out} and K⁽²⁾_{RLM_eva_out} are both coefficients with positive values, and max(parameter 1, parameter 2, ..., parameter n) represents a maximum value in the parameter 1, the parameter 2, ..., and the parameter n, wherein n is a positive integer.

26. The method according to any one of claims 20 to 24, wherein the channel quality measurement is the RLM measurement, the first cell is a primary secondary cell PSCell and is in a deactivated state, and the N reference signals comprise the first reference signal; and
if the second parameter is less than or equal to the second threshold, an OOS evaluation periodicity of the first reference signal is max(K⁽¹⁾_{RLM_eva_out}×first configuration periodicity, K⁽²⁾_{RLM_eva_out}×second parameter); or
if the second parameter is greater than the second threshold, the OOS evaluation periodicity of the first reference signal is max(K⁽³⁾_{RLM_eva_out}×first configuration periodicity, K⁽⁴⁾_{RLM_eva_out}×second parameter), wherein
K⁽¹⁾_{RLM_eva_out}, K⁽²⁾_{RLM_eva_out}, K⁽³⁾_{RLM_eva_out}, and K⁽⁴⁾_{RLM_eva_out} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

27. The method according to any one of claims 20 to 26, wherein the channel quality measurement is the RLM measurement, the N reference signals are N synchronization signal/physical broadcast channel blocks SSBs, the N SSBs comprise a first SSB, and the method further comprises:
if the second parameter is less than or equal to a third threshold, and the first cell satisfies a low mobility criterion and/or a high channel quality criterion, when max(periodicity of the first SSB, second parameter) is less than or equal to the third threshold, extending an OOS evaluation periodicity of the first SSB to max(K⁽¹⁾_{PLM_SSB_relax}×fourth duration, K⁽²⁾_{PLM_SSB_relax}×max(periodicity of the first SSB, second parameter)); or
if the second parameter is less than or equal to the third threshold, and the first cell satisfies the low mobility criterion and/or the high channel quality criterion, when max(periodicity of the first SSB, second parameter) is greater than the third threshold and less than a fourth threshold, extending the OOS evaluation periodicity of the first SSB to K⁽³⁾_{PLM_SSB_relax}×max(periodicity of the first SSB, second parameter), wherein
K⁽¹⁾_{PLM_SSB_relax}, K⁽²⁾_{PLM_SSB_relax}, and K⁽³⁾_{PLM_SSB_relax} are all coefficients with positive values, and max(parameter 1, parameter 2, ..., parameter n) represents a maximum value in the parameter 1, the parameter 2, ..., and the parameter n, wherein n is a positive integer.

28. The method according to any one of claims 20 to 26, wherein the channel quality measurement is the RLM measurement, the N reference signals are N channel state information-reference signals CSI-RSs, the N CSI-RSs comprise a first CSI-RS, and the method further comprises:
if the second parameter is less than or equal to a third threshold, and the first cell satisfies a low mobility criterion and/or a high channel quality criterion, when max(periodicity of the first CSI-RS, second parameter) is less than or equal to the third threshold, extending an OOS evaluation periodicity of the first CSI-RS to max(K⁽¹⁾_{PLM_CSI-RS_relax}×fourth duration, K⁽²⁾_{PLM_CSI-RS_relax}×max(periodicity of the first CSI-RS, second parameter)), wherein
K⁽¹⁾_{PLM_CSI-RS_relax} and K⁽²⁾_{PLM_CSI-RS_relax} are both coefficients with positive values, and max(parameter 1, parameter 2, ..., parameter n) represents a maximum value in the parameter 1, the parameter 2, ..., and the parameter n, wherein n is a positive integer.

29. The method according to claim 20, wherein the channel quality measurement is the BFD measurement; and
the first parameter is less than or equal to a first threshold, a reporting periodicity of the BFD measurement is max(K⁽¹⁾_{BFD_report}×first reference signal periodicity, K⁽²⁾_{BFD_report}×first parameter), and the first reference signal periodicity is a periodicity of one of the N reference signals; or
the first parameter is greater than the first threshold, and the reporting periodicity of the BFD measurement is K⁽³⁾_{BFD_report}×first parameter, wherein
K⁽¹⁾_{BFD_report}, K⁽²⁾_{BFD_report}, and K⁽³⁾_{BFD_report} are all coefficients with positive values, and max(parameter 1, parameter 2, ..., parameter n) represents a maximum value in the parameter 1, the parameter 2, ..., and the parameter n, wherein n is a positive integer.

30. The method according to claim 20, wherein the channel quality measurement is the BFD measurement, and the first cell is a primary secondary cell PSCell and is in a deactivated state; and
the first parameter is less than or equal to a first threshold, a reporting periodicity of the BFD measurement is max(K⁽¹⁾_{BFD_report}×first configuration periodicity, K⁽²⁾_{BFD_report}×first parameter), and the first reference signal periodicity is a periodicity of one of the N reference signals; or
the first parameter is greater than the first threshold, and the reporting periodicity of the BFD measurement is K⁽³⁾_{BFD_report}×first parameter, wherein
K⁽¹⁾_{RLM_report}, K⁽²⁾_{RLM_report}, and K⁽³⁾_{RLM_report} are all coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

31. The method according to any one of claims 20, 29, and 30, wherein the channel quality measurement is the BFD measurement, and the N reference signals comprise a first reference signal; and
if the second parameter is less than or equal to a second threshold, an evaluation periodicity of the first reference signal is max(K⁽¹⁾_{BFD_eva}×max(periodicity of the first reference signal, second parameter)); or
if the second parameter is greater than the second threshold, the evaluation periodicity of the first reference signal is K⁽²⁾_{BFD_eva}×second parameter, wherein
K⁽¹⁾_{BFD_eva} and K⁽²⁾_{BFD_eva} are both coefficients with positive values, and max(parameter 1, parameter 2, ..., parameter n) represents a maximum value in the parameter 1, the parameter 2, ..., and the parameter n, wherein n is a positive integer.

32. The method according to any one of claims 20, 29, and 30, wherein the channel quality measurement is the BFD measurement, the first cell is a primary secondary cell PSCell and is in a deactivated state, and the N reference signals comprise a first reference signal; and
if the second parameter is less than or equal to a second threshold, an evaluation periodicity of the first reference signal is K⁽³⁾_{BFD_eva}×max(first configuration periodicity, second parameter); or
if the second parameter is greater than the second threshold, the evaluation periodicity of the first reference signal is K⁽⁴⁾_{BFD_eva}×max(first configuration periodicity, second parameter), wherein
K⁽³⁾_{BFD_eva} and K⁽⁴⁾_{BFD_eva} are both coefficients with positive values, the first configuration periodicity is a preset value or is configured by the network device, and max(parameter 1, parameter 2, ..., parameter n) represents a maximum value in the parameter 1, the parameter 2, ..., and the parameter n, wherein n is a positive integer.

33. The method according to any one of claims 20 and 29 to 32, wherein the channel quality measurement is the BFD measurement, the N reference signals are N SSBs, the N SSBs comprise a first SSB, and the method further comprises:
if the second parameter is less than or equal to a third threshold, and the first cell satisfies a low mobility criterion and/or a high channel quality criterion, when max(periodicity of the first SSB, second parameter) is less than or equal to the third threshold, extending an evaluation periodicity of the first SSB to max(K⁽¹⁾_{BFD_SSB_relax}×seventh duration, K⁽²⁾_{BFD_SSB_relax}×max(periodicity of the first SSB, second parameter)); or
if the second parameter is less than or equal to the third threshold, and the first cell satisfies the low mobility criterion and/or the high channel quality criterion, when max(periodicity of the first SSB, second parameter) is greater than the third threshold and less than a fourth threshold, extending the evaluation periodicity of the first SSB to max(K⁽³⁾_{BFD_SSB_relax}×max(periodicity of the first SSB, second parameter), eighth duration), wherein
K⁽¹⁾_{BFD_SSB_relax}, K⁽²⁾_{BFD_SSB_relax}, and K⁽³⁾_{BFD_SSB_relax} are all coefficients with positive values, and max(parameter 1, parameter 2, ..., parameter n) represents a maximum value in the parameter 1, the parameter 2, ..., and the parameter n, wherein n is a positive integer.

34. The method according to any one of claims 20 and 29 to 32, wherein the channel quality measurement is the BFD measurement, the N reference signals are N CSI-RSs, the N CSI-RSs comprise a first CSI-RS, and the method further comprises:
if the second parameter is less than or equal to a third threshold, and the first cell satisfies a low mobility criterion and/or a high channel quality criterion, when max(periodicity of the first CSI-RS, second parameter) is less than or equal to the third threshold, extending an OOS evaluation periodicity of the first CSI-RS to max(K⁽¹⁾_{BFD_CSI-RS_relax}×seventh duration, K⁽²⁾_{BFD_CSI-RS_relax}×max(periodicity of the first CSI-RS, second parameter)), wherein
K⁽¹⁾_{BFD_CSI-RS_relax} and K⁽²⁾_{BFD_CSI-RS_relax} are both coefficients with positive values, and max(parameter 1, parameter 2, ..., parameter n) represents a maximum value in the parameter 1, the parameter 2, ..., and the parameter n, wherein n is a positive integer.

35. The method according to claim 19, wherein the channel quality measurement is the BFR measurement; and
if the second parameter is less than or equal to a second threshold, an evaluation periodicity of the first reference signal is max(K⁽¹⁾_{BFR_eva}×periodicity of the first reference signal, eighth duration); or
if the second parameter is greater than the second threshold, the evaluation periodicity of the first reference signal is K⁽²⁾_{BFR_eva}×second parameter, wherein
K⁽¹⁾_{BFR_eva} and K⁽²⁾_{BFR_eva} are both coefficients with positive values, and max(parameter 1, parameter 2, ..., parameter n) represents a maximum value in the parameter 1, the parameter 2, ..., and the parameter n, wherein n is a positive integer.

36. The method according to any one of claims 19 to 35, wherein the first indication information indicates a cell discontinuous transmission/discontinuous reception cell DTX/DRX configuration, and the second indication information indicates a connected-discontinuous reception C-DRX configuration.

37. The method according to any one of claims 19 to 36, wherein the first channel is a downlink channel, or the first channel comprises a downlink channel and an uplink channel; and
the uplink channel comprises one or more of the following channel types: a configured grant physical uplink shared channel CG PUSCH, a hybrid automatic repeat request acknowledgment HARQ-ACK of a semi-persistent scheduled physical downlink shared channel SPS PDSCH, a scheduling request SR, a physical random access channel PRACH, a random access message A, and a random access message 3; or
the downlink channel comprises one or more of the following channel types: a physical downlink control channel PDCCH scrambled by a modulation and coding scheme-cell-radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal/physical broadcast channel block SSB, system information, a paging message, a random access message 2, a random access message 4, a random access message B, a beam failure recovery BFR, or a semi-persistent scheduled SPS PDSCH.

38. A communication apparatus, comprising units or modules configured to perform the method according to any one of claims 1 to 18, or comprising units or modules configured to perform the method according to any one of claims 19 to 37.

39. A communication apparatus, comprising one or more processors and one or more memories, wherein the one or more memories store one or more programs, and when the program is executed by the one or more processors, the apparatus is enabled to perform the method according to any one of claims 1 to 18, or perform the method according to any one of claims 19 to 37.

40. A chip system, wherein the chip system comprises at least one chip and a memory, and the at least one chip is configured to read and execute a program stored in the memory, to implement the method according to any one of claims 1 to 18, or implement the method according to any one of claims 19 to 37.

41. A readable storage medium, wherein the readable storage medium comprises a program, and when the program runs on an apparatus, the apparatus is enabled to perform the method according to any one of claims 1 to 18, or perform the method according to any one of claims 19 to 37.

42. A program product, wherein when the program product runs on an apparatus, the apparatus is enabled to perform the method according to any one of claims 1 to 18, or perform the method according to any one of claims 19 to 37.
